# EUROPEAN PATENT APPLICATION

(11) **EP 4 811 045 A1**
(43) Date of publication of application: **23.09.2026**
(21) Application number: 26163868.8
(22) Date of filing: 11.03.2026
(51) Int. Cl.: G03G 15/00, G03G 21/16

(54) **SHEET CONVEYANCE APPARATUS AND IMAGE FORMING APPARATUS**

(30) Priority: 17.03.2025 JP 2025042691; 07.01.2026 JP 2026001573
(71) Applicant: Canon Kabushiki Kaisha, Tokyo 146-8501 (JP)
(72) Inventor: OSAWA, Yuichiro, Ohta-ku, Tokyo, 146-8501 (JP); KAWANAMI, Takeo, Ohta-ku, Tokyo, 146-8501 (JP)
(74) Representative: TBK

(57) **Abstract**

Disclosed is a sheet conveyance apparatus including a first conveyance member (23b) configured to rotate in contact with a sheet, a second conveyance member (13) disposed at a position different from a position of the first conveyance member (23b) in the sheet conveyance direction, a motor (M), a first rotary member (51) connected to the motor (M), a second rotary member (52) connected to the first conveyance member (23b), and an elastic member (40) engaged with the first rotary member (51) and the second rotary member (52), the elastic member (40) being deformable to allow the first conveyance member (23b) to rotate in a state where an angular velocity of the first rotary member (51) being driven by the motor (M) differs from an angular velocity of the second rotary member (52).

## Description

### TECHNICAL FIELD

The present disclosure relates to a sheet conveyance apparatus for conveying sheets and an image forming apparatus for forming images on sheets.

### BACKGROUND

Japanese Patent Application Laid-Open Publication No. H07-234604 discloses an image forming apparatus that includes independent drive systems for respectively driving a fixing unit and a transfer unit, that detects a looped amount of a sheet formed on the sheet prior to entering an inlet of the fixing unit, and that controls a driving speed of the fixing unit based on the detected looped amount.

### SUMMARY

The present disclosure in its first aspect provides a sheet conveyance apparatus as specified in claim 1. Optional features are specified in claim 2 to 14.

The present disclosure in its second aspect provides an image forming apparatus as specified in claim 15.

Features of the present disclosure will become apparent from the following description of embodiments with reference to the attached drawings. The following description of embodiments is described by way of example.

According to the present disclosure, a sheet conveyance apparatus and an image forming apparatus capable of conveying the sheet more stably may be provided.

### BRIEF DESCRIPTION OF THE DRAWINGS

FIG. 1 is a schematic drawing of an image forming apparatus according to a first embodiment.
FIGs. 2A to 2E are each a view illustrating a conveyance state of a sheet between a transfer nip and a fixing nip.
FIG. 3A illustrates a drive transmission path in the first embodiment, and FIGs. 3B and 3C illustrate drive transmission paths in modified examples.
FIG. 4A is an exploded view of a drive transmission unit in the first embodiment, FIG. 4B is a perspective view of the drive transmission unit in the first embodiment, and FIG. 4C is a cross-sectional view of the drive transmission unit in the first embodiment.
FIGs. 5A to 5C are each an explanatory view regarding an angular velocity of elements participating in drive transmission according to the first embodiment.
FIGs. 6A to 6D are each a view of a modified example adopting a plurality of torsion springs.
FIGs. 7A and 7B are each an explanatory view of a modified example adopting a plurality of torsion springs.
FIGs. 8A and 8B are each a view illustrating a modified example adopting both a torsion spring and a torque limiter.
FIGs. 9A to 9C are each an explanatory view regarding an operation of the torque limiter according to the modified example.
FIG. 10 is an exploded view of a drive transmission unit according to a second embodiment.
FIGs. 11A to 11C are each a view illustrating a conveyance state of a sheet between a registration nip and a transfer nip.
FIG. 12 is a view illustrating a drive transmission path according to the second embodiment.
FIGs. 13A to 13C are each an explanatory view regarding an angular velocity of elements participating in drive transmission according to the second embodiment.
FIGs. 14A to 14C are each an explanatory view regarding an angular velocity of elements participating in drive transmission according to the modified example.
FIG. 15 is a schematic drawing of an image forming apparatus according to a third embodiment.

### DESCRIPTION OF THE EMBODIMENTS

Embodiments regarding the present disclosure will be described below with reference to the drawings.

### First Embodiment

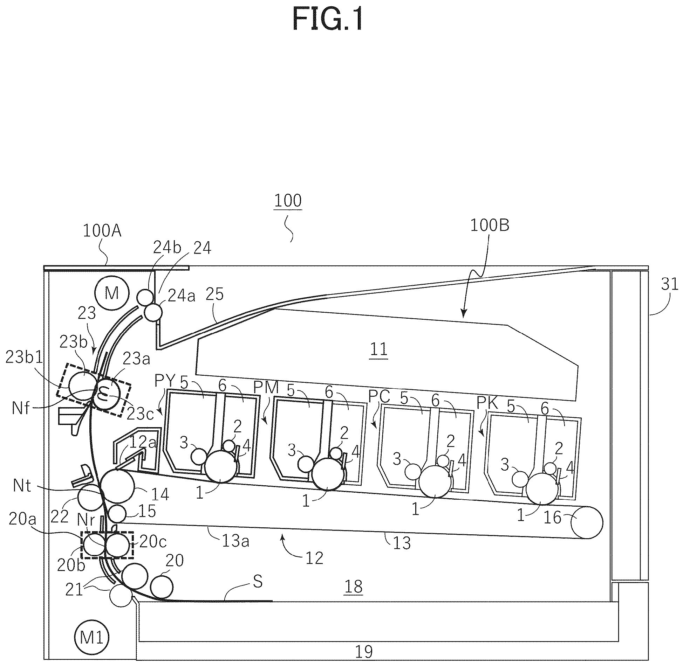

FIG. 1 is a cross-sectional view of an image forming apparatus 100 according to a first embodiment serving as one embodiment. The image forming apparatus 100 is a four-color full-color laser printer, i.e., electrophotographic image forming apparatus, adopting an electrophotographic process, and includes four process cartridges PY, PM, PC, and PK serving as first to fourth cartridges. The image forming apparatus 100 forms an image on a sheet S based on an image information received from an external device, for example.

The number of process cartridges in the electrophotographic image forming apparatus is not limited to four, and the apparatus may be a monochrome laser printer including only one process cartridge. Further, the term "image forming apparatus" is not limited to a single function printer having a function to form images on sheets S based on image information received from an external device, and may refer to a copying machine, a facsimile, or a multifunction apparatus having combined such functions.

In the following descriptions and drawings, regarding the image forming apparatus 100, a front side refers to a side on which a door 31 is disposed, and a rear side refers to a side opposite to the door 31. A front-rear direction is a direction from the rear side toward the front side of the image forming apparatus 100, i.e., front direction, and a direction opposite thereto, i.e., rear direction. Regarding the image forming apparatus 100, a right-left direction is a right and left direction in a state where the image forming apparatus 100 is viewed from the front side. Regarding the image forming apparatus 100, an up-down direction is a vertical direction, i.e., gravity direction, in a state where the image forming apparatus 100 is installed on a horizontal plane.

The term "sheet conveyance apparatus" according to the present disclosure refers, for example, to a conveyance apparatus for conveying the sheet S used as a recording material, i.e., recording medium, in the image forming apparatus. The "sheet conveyance apparatus" may be a part of the image forming apparatus body equipped with an image forming function or may be disposed on an apparatus independent from the image forming apparatus body. A part of the image forming apparatus 100 according to the present embodiment excluding the process cartridges PY to PK serving as image forming portions is an example of the sheet conveyance apparatus.

### Entire Configuration of Image Forming Apparatus

As illustrated in FIG. 1, the image forming apparatus 100 includes an apparatus main body 100A and process cartridges PY, PM, PC, and PK. The process cartridges PY to PK are detachably attached to the apparatus main body 100A. The apparatus main body 100A refers to a portion of the image forming apparatus 100 excluding the process cartridges PY, PM, PC, and PK.

A cartridge storage portion serving as a mounting space for storing the process cartridges PY, PM, PC, and PK is provided inside the apparatus main body 100A. The four process cartridges PY, PM, PC, and PK are stored in a predetermined attachment position in the cartridge storage portion in a state aligned approximately horizontally from the rear side to the front side of the apparatus main body 100A.

The process cartridges PY to PK are each an example of an image forming portion for forming an image to be recorded on a sheet that is conveyed inside the image forming apparatus 100. The process cartridges PY to PK each include a photosensitive drum 1 serving as an image bearing member, and at least one processing member that acts on the photosensitive drum 1 to execute an electrophotographic process. Each of the process cartridges PY to PK according to the present embodiment includes a charger 2 serving as a charging unit, a developing unit 3 serving as an image developing unit, and a cleaning unit 4 serving as a cleaning unit.

A first process cartridge PY stores yellow toner in the developing unit 3, and forms a yellow toner image on a surface of the photosensitive drum 1. A second process cartridge PM stores magenta toner in the developing unit 3, and forms a magenta toner image on the surface of the photosensitive drum 1. A third process cartridge PC stores cyan toner in the developing unit 3, and forms a cyan toner image on the surface of the photosensitive drum 1. A fourth process cartridge PK stores black toner in the developing unit 3, and forms a black toner image on a surface of the photosensitive drum 1.

Further, the apparatus main body 100A includes a scanner unit 11, a transfer unit 12, a fixing unit 23, a feeding unit 18, a registration roller pair 20a, and a sheet discharge roller pair 24.

The scanner unit 11 is arranged above the process cartridges PY to PK. The scanner unit 11 is an example of an exposure unit for exposing the photosensitive drum 1 of each of the process cartridges PY to PK. The scanner unit 11 outputs a laser light modulated based on image information, and scans and exposes the surface of the photosensitive drum 1 of the respective process cartridges PY to PK through an exposure window 6 disposed on an upper side of a cartridge frame 5. An LED exposing unit that uses LED as a light source may be adopted as an exposure unit.

The transfer unit 12 is configured to form a transfer nip Nt, and to transfer the toner image to the sheet S while nipping and conveying the sheet S by the transfer nip Nt. The transfer unit of the present embodiment is driven by a motor M serving as a common driving source as the fixing unit 23.

The transfer unit 12 is arranged below the process cartridges PY to PK. The transfer unit 12 includes an intermediate transfer belt 13 serving as an intermediate transfer body, a belt driving roller 14, a turn roller 15, a tension roller 16, a belt cleaning unit 12a, and a secondary transfer roller 22.

The intermediate transfer belt 13 is an endless film member, i.e., sheet member, formed of a dielectric material and having flexibility. The intermediate transfer belt 13 is stretched across the belt driving roller 14, the turn roller 15, and the tension roller 16, and is driven to rotate by rotation of the belt driving roller 14. The belt driving roller 14 and the turn roller 15 are arranged on a rear side within the apparatus main body 100A. The tension roller 16 is arranged on a front side inside the apparatus main body 100A. The belt cleaning unit 12a includes a cleaning member that cleans the surface of the intermediate transfer belt 13 along with the rotation of the intermediate transfer belt 13.

Regarding the intermediate transfer belt 13, a portion stretched across the belt driving roller 14 and the tension roller 16 is referred to as an upper portion, and a portion stretched across the tension roller 16 and the turn roller 15 is referred to as a lower portion. In a state where the process cartridges PY to PK are each attached to the attachment position, a lower surface of each photosensitive drum 1 is in contact with an upper surface of the upper portion of the intermediate transfer belt 13. Four primary transfer rollers are disposed on the inner side of the intermediate transfer belt 13 to face each of the photosensitive drums 1 with the intermediate transfer belt 13 interposed therebetween. Nip portions between the respective photosensitive drums 1 and the intermediate transfer belt 13 are each a primary transfer portion at which primary transfer of transfer image is performed.

The secondary transfer roller 22 is in contact with the belt driving roller 14 of the transfer unit 12 with the intermediate transfer belt 13 interposed therebetween. The transfer nip Nt, i.e., secondary transfer nip, which is a nip portion between the secondary transfer roller 22 and the intermediate transfer belt 13, is a secondary transfer portion where transfer of toner image to the sheet S is performed. The secondary transfer roller 22 is a conveyance member that nips and conveys the sheet S together with the intermediate transfer belt 13 at the transfer nip Nt. The secondary transfer roller 22 is an example of an opposing member, i.e., second opposing member, facing the intermediate transfer belt 13. The intermediate transfer belt 13 and the secondary transfer roller 22 are examples of a conveyance member pair or a roller pair, i.e., second conveyance member pair or second roller pair, that nips the sheet S.

An image forming mechanism 100B including the process cartridges PY to PK, the scanner unit 11, and the transfer unit 12 described above functions as an image forming portion that forms an image, i.e., toner image, on the sheet S.

The feeding unit 18 is disposed below the transfer unit 12. The feeding unit 18 includes a feeding tray 19, i.e., storage portion, in which the sheets S are stacked and stored, a feed roller 20 serving as a feeding member, and a separation roller pair 21.

Various types of sheet members with different sizes and materials, such as paper including normal paper and thick paper, plastic films, cloths, coated paper and other sheet members having surface processing applied thereto, and sheet members having special shapes such as envelopes and index paper, may be used as the sheet S serving as the recording material, i.e., recording medium. The feeding tray 19 adopts a so-called front loading configuration, wherein the tray can be drawn out to the front side from the apparatus main body 100A and inserted rearward toward a predetermined attachment position within the apparatus main body 100A.

The fixing unit 23 is configured to form a fixing nip Nf and fix the toner image onto the sheet S while nipping and conveying the sheet S by the fixing nip Nf. The fixing unit 23 is arranged at an upper portion on the rear side within the apparatus main body 100A. The fixing unit 23 is a unit, i.e., image heating apparatus, that applies heat and pressure to the sheet S to which the toner image has been transferred to perform an image fixing process. The fixing unit 23 includes a fixing film assembly 23a, and a pressure roller 23b serving as a pressing member. The fixing film assembly 23a is an example of an opposing member, i.e., first opposing member, that opposes or faces the pressure roller 23b. The pressure roller 23b and the fixing film assembly 23a are examples of a conveyance member pair or a roller pair, i.e., first conveyance member pair or first roller pair, that nips the sheet S.

The fixing film assembly 23a includes a film serving as a fixing member, i.e., heating member, a heater 23c serving as a heating unit, and a heater holder that holds the heater 23c. The film is a tubular member having flexibility. The heater 23c and the heater holder are disposed in an inner space of the film. The heater 23c and the heater holder are arranged to come into pressure contact with the pressure roller 23b with the film interposed therebetween. Thereby, the fixing nip Nf is formed between the pressure roller 23b and the film. The heater 23c and the heater holder may be referred to as a nip forming unit.

A cylindrical roller having rigidity or an endless belt stretched across a plurality of rollers may be used as the fixing member. A halogen lamp that emits radiant heat when energized or a coil that causes the fixing member itself to generate heat by induction heating may also be used as the heating unit.

The sheet discharge roller pair 24 is disposed above the fixing unit 23. The sheet discharge roller pair 24 is a sheet discharge unit that discharges the sheets S. A sheet discharge tray 25 on which the sheets S discharged by the sheet discharge roller pair 24 are supported is formed on the upper surface of the apparatus main body 100A. The sheet discharge roller pair 24 includes a sheet discharge roller 24a and a sheet discharge follower roller 24b.

In the present embodiment, a "roller" serving as a component constituting the roller pair refers in general to a driving roller that is rotated by having driving force supplied from a driving source via a drive transmission portion such as a gear train. According further to the present embodiment, a "follower roller" serving as a component constituting the roller pair refers in general to a driven roller that is driven to rotate, i.e., corotates, along with the rotation of the driving roller. In a case where the drive transmission portion may be disposed appropriately, the positions the roller, i.e., driving roller, and the follower roller, i.e., driven roller, may be exchanged. Further, both rollers constituting the roller pair may be the driving roller. What is meant by the driving source driving the roller pair is that the driving source drives the driving roller.

Further, motors M and M1 serving as the driving source are disposed in the apparatus main body 100A. The motor M drives the intermediate transfer belt 13 and the pressure roller 23b to rotate. The motor M1 drives the feed roller 20 and the separation roller pair 21 to rotate.

The pressure roller 23b according to the present embodiment is an example of a first conveyance member that comes into contact with the sheet S and rotates, and conveys the sheet S in a sheet conveyance direction. The intermediate transfer belt 13 is an example of a second conveyance member arranged at a position that differs from the pressure roller 23b, i.e., first conveyance member, in the sheet conveyance direction, that comes into contact with the sheet S at least during a portion of a period of time at which the pressure roller 23b comes into contact with the sheet S and rotates, and conveys the sheet S. In other words, the intermediate transfer belt 13 and the pressure roller 23b are configured such that there is a period of time during which both simultaneously come into contact with a single sheet S. Further, the "sheet conveyance direction" refers to a direction of movement of the sheet S that is conveyed along a conveyance path that passes the transfer nip Nt and the fixing nip Nf.

An outer circumference surface 23b1 of the pressure roller 23b is an example of a first contact surface that comes into contact with the sheet S. An outer circumference surface 13a of the intermediate transfer belt 13 is an example of a second contact surface that comes into contact with the sheet S.

Further, the pressure roller 23b of the present embodiment is disposed adjacent to the transfer nip Nt in the sheet conveyance direction. That is, the pressure roller 23b is arranged at the fixing nip Nf where the sheet S conveyed in the sheet conveyance direction receives a force in the sheet conveyance direction, i.e., conveyance force, subsequent to the transfer nip Nt.

### Image Forming Operation

An image forming operation, which is a sequence of operations performed by the image forming apparatus 100 to form an image on a sheet S while conveying the sheet S, will be described. The image forming apparatus 100 starts the image forming operation in a case where an instruction to execute image formation is received together with the image information. The following describes a case where a full-color image is formed on the sheet S.

At first, the photosensitive drum 1 of each of the process cartridges PY, PM, PC, and PK is driven to rotate at a predetermined peripheral speed in a counterclockwise direction in the drawing. The intermediate transfer belt 13 is also driven to rotate at a speed corresponding to the peripheral speed of the photosensitive drum 1 in a direction, i.e., clockwise direction in the drawing, corotating with the rotation of the photosensitive drum 1. A peripheral speed of the intermediate transfer belt 13 determines a transfer speed, i.e., image forming speed in the sub-scanning direction, at which the toner image is transferred to the sheet S at the transfer nip Nt, and it is also referred to as a processing speed. Further, the scanner unit 11 is driven in parallel with the driving of the photosensitive drum 1 and the intermediate transfer belt 13. The scanner unit 11 is driven by an image signal, also referred to as a video signal, having converted an image data, formed by decomposing an image information entered to the image forming apparatus 100 from an external computer into component images of respective toner colors, into a time-series signal.

In the respective process cartridges PY to PK, the charger 2 to which a charging voltage is applied charges the surface of the photosensitive drum 1 uniformly to a predetermined polarity and potential. The scanner unit 11 exposes the surface of each photosensitive drum 1 based on the image signal, by which an electrostatic latent image corresponding to the component image of each color is formed on the surface of each photosensitive drum 1. The electrostatic latent image is developed as a toner image, i.e., developer image, by toner serving as a developer supplied from the developing unit 3.

By the operations described above, yellow, magenta, cyan, and black toner images are formed on the four photosensitive drums 1 of the process cartridges PY, PM, PC, and PK. The toner images are primarily transferred to the intermediate transfer belt 13 at the primary transfer portions. In this process, by performing the primary transfer such that the toner images of other colors are superposed on the toner image that has already been primarily transferred thereto, a full-color toner image is formed on the intermediate transfer belt 13. In the respective process cartridges PY to PK, toner remaining on the photosensitive drum 1 without being transferred to the intermediate transfer belt 13, i.e., transfer residual toner, is removed by the cleaning unit 4.

In parallel with the operation of the image forming mechanism 100B described above, a sheet conveyance operation of conveying the sheet S is executed as follows. At first, the motor M1 serving as a driving source is started, and the feed roller 20 and the separation roller pair 21 are driven to rotate by the driving force of the motor M1. The feed roller 20 comes into contact with the uppermost sheet S of a sheet bundle supported on the feeding tray 19, rotates, and feeds the sheet. The separation roller pair 21 includes a conveyance roller that further conveys the sheet S received from the feed roller 20, and a separation roller that is in pressure contact with the conveyance roller. The separation roller is attached to a roller shaft fixed to the apparatus main body 100A via a torque limiter. The separation roller allows only one sheet S in contact with the conveyance roller to pass through a separation nip by applying a frictional force to the sheet S passing through the separation nip between the conveyance roller and the separation roller, and prevents other sheets S from passing through the separation nip. The separation roller pair 21 is an example of a conveyance member that separates and conveys the sheet S, and for example, a pad-shaped rubber member, i.e., separation pad, may be used instead of the separation roller.

The sheet S sent out from the separation roller pair 21 is sent to the registration roller pair 20a. The registration roller pair 20a includes a registration roller 20b and a registration driven roller 20c. The registration driven roller 20c is an example of an opposing member facing the registration roller 20b. The registration roller 20b and the registration driven roller 20c are an example of a conveyance member pair or a roller pair that nips the sheet S. Further, a shutter movable between a closed position where a registration nip Nr which is a nip portion of the registration roller pair 20a is closed and an opened position where the nip portion is released is disposed near the registration roller pair 20a.

By having the leading edge of the sheet S abut against the shutter in the closed position, the conveyance of the leading edge of the sheet S is restricted. The shutter is urged by an urging member to the closed position so as not to pivot at a point of time when the leading edge of the sheet S comes into contact therewith. After the leading edge of the sheet S has abutted against the abutment portion, when conveyance of the sheet S is continued by the upstream-side roller pair, which according to the present embodiment is the separation roller pair 21, the sheet S is warped between the separation roller pair 21 and the registration roller pair 20a. In this state, the leading edge of the sheet S turns so as to be aligned with the shutter, and skewing of the sheet S is corrected.

Thereafter, as the warping of the sheet S between the upstream-side roller pair and the registration roller pair 20a increases, the force in the conveyance direction acting on the shutter increases due to an elastic force, that is, force toward an expanding direction so as to clear warping, of the sheet S. When the force exceeds the urging force of the urging member, the shutter retracts to the opened position, and the leading edge of the sheet S enters the registration nip Nr. A configuration in which a shutter is used to execute skew correction of the sheet S has been described above, but for example, skew correction of the sheet S may also be performed by abutting the leading edge of the sheet S against the registration nip Nr while the registration roller pair 20a is in a stopped state.

Thereafter, at a matched timing with the arrival of the toner image formed on the intermediate transfer belt 13 to the transfer nip Nt, driving of the registration roller pair 20a is started, and the registration roller pair 20a conveys the sheet S to the transfer nip Nt. By having a secondary transfer bias supplied to the secondary transfer roller 22 at the transfer nip Nt, the toner image on the intermediate transfer belt 13 is transferred electrostatically to the sheet S. At the transfer nip Nt, the sheet S is nipped by the intermediate transfer belt 13 and the secondary transfer roller 22, and conveyed toward the fixing unit 23 by a peripheral speed, i.e., processing speed, of the intermediate transfer belt 13. Toner remaining on the intermediate transfer belt 13 without being transferred to the sheet S, i.e., transfer residual toner, is removed by the belt cleaning unit 12a.

The fixing unit 23 applies heat and pressure to the toner image on the sheet S while nipping and conveying the sheet S by the fixing nip Nf. Thereby, mixing of respective toner colors and the fixing thereof to the sheet S is performed. The sheet S having passed through the fixing unit 23 is discharged to the exterior of the apparatus main body 100A by the sheet discharge roller pair 24, and supported on the sheet discharge tray 25.

The secondary transfer roller 22 is urged via an urging member, i.e., spring member, not shown with a predetermined pressing force, for example, 4 kgf, toward the intermediate transfer belt 13. Thereby, a pressure, i.e., nip pressure, between the secondary transfer roller 22 and the intermediate transfer belt 13 is generated at the transfer nip Nt. The magnitude of the pressing force defining the nip pressure of the transfer nip Nt is set by taking into consideration the width of the transfer nip Nt in the sheet conveyance direction, the difference between widths of the transfer nip Nt at a center and at end portions of the secondary transfer roller 22 in the rotational axis direction, and adhesion of the sheet S with the intermediate transfer belt 13.

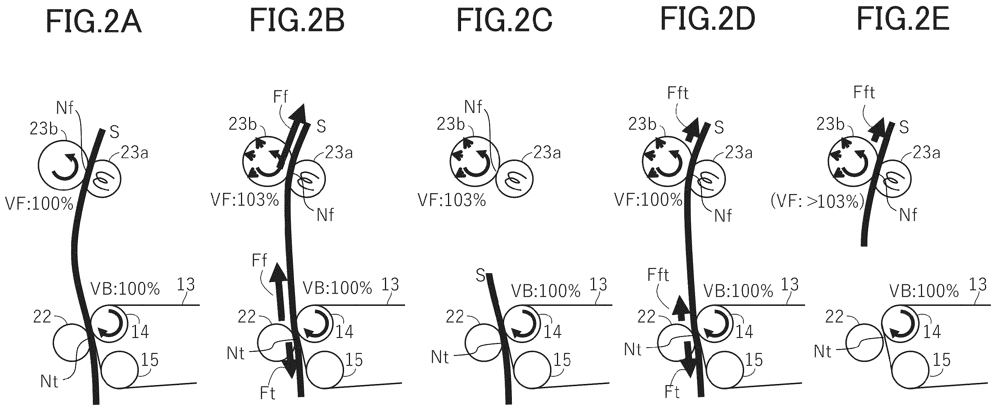

In this state, a maximum value of frictional force received by the sheet S at the nip portion of the conveyance member without the sheet S slipping against the conveyance member is referred to as a holding force Ft (FIG. 2B) of the sheet S at the nip portion. In a state where the pressing force of the secondary transfer roller 22 is set to the above value (4 kgf), the holding force Ft of the sheet S at the transfer nip Nt is, for example, 1 kgf. This means that if the sheet S nipped by the transfer nip Nt is pulled either upstream or downstream in the sheet conveyance direction with a force equal to or greater than 1 kgf, the sheet S will slip against the intermediate transfer belt 13.

When the sheet S slips against the intermediate transfer belt 13 during transfer of the toner image, the transferred image may be disturbed. The slipperiness of the sheet S also varies according to the amount of toner transferred at the transfer nip Nt. In order to suppress slipping of the sheet S, it may be preferable to enhance the holding force Ft of the sheet S at the transfer nip Nt by increasing the nip pressure of the transfer nip Nt.

Further, the fixing film assembly 23a of the fixing unit 23 is urged toward the pressure roller 23b by a pressing force of 20 kgf by an urging member, i.e., spring member, not shown. Thereby, at the fixing nip Nf, pressure, i.e., nip pressure, between the fixing film assembly 23a and the pressure roller 23b is generated. The nip pressure of the fixing nip Nf is set in consideration of the fixity or glossiness of the image.

If the pressing force of the fixing film assembly 23a is set to the above value (20 kgf), a holding force Ff of the sheet S at the fixing nip Nf (FIG. 2B) is, for example, equal to or greater than 5 kgf. That is, the holding force Ff of the sheet S at the fixing nip Nf is greater than the holding force Ft of the sheet S at the transfer nip Nt.

### Drive Configuration of Pressure Roller

The pressure roller 23b according to the present embodiment has a diameter of 20 mm and is driven by the motor M serving as a driving source. Necessary torque for rotating the pressure roller 23b, i.e., load torque of the pressure roller 23b, may be dispersed within a range between 2 kgf cm and 3.5 kgf cm due to the dispersion of pressing force of the fixing nip Nf. Further, the pressure roller 23b is thermally expanded by the effect of heat generated by the heater 23c.

Due to cause such as tolerance of outer diameter during fabrication of the pressure roller 23b, values of a peripheral speed VB of the intermediate transfer belt 13 during image formation and a peripheral speed VF of the pressure roller 23b may differ. That is, in a case where an angular velocity of the pressure roller 23b and the belt driving roller 14 with respect to an angular velocity of an output shaft of the motor M is constant, the peripheral speeds VB and VF of the pressure roller 23b and the intermediate transfer belt 13 may be different values. For example, as illustrated in FIG. 2B, in a state where the peripheral speed VB of the intermediate transfer belt 13 is 100%, the pressure roller 23b may be rotated at the peripheral speed VF of approximately 103%. Due to this speed difference, during a time at which the outer circumference surface of the intermediate transfer belt 13 moves for a distance corresponding to a long side of an A4-size sheet S (297 mm), the outer circumference surface of the pressure roller 23b moves for a distance approximately 9 mm longer (306 mm) than the intermediate transfer belt 13.

Now, since the holding force Ff of the sheet S at the fixing nip Nf is greater than the holding force Ft of the sheet S at the transfer nip Nt, if a relationship of VF > VB is realized, the sheet S may slip against the intermediate transfer belt 13. That is, the sheet is conveyed at the peripheral speed VF of the pressure roller 23b, and the sheet S may slip against the intermediate transfer belt 13 rotated at the peripheral speed VB, by which the transferred image may be disturbed.

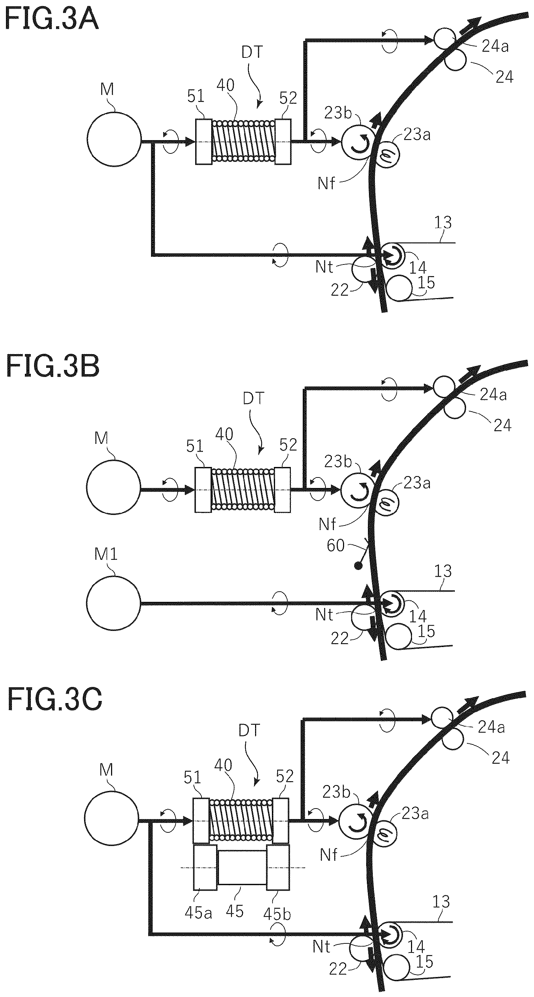

As illustrated in FIG. 3A, according to the present embodiment, driving force is transmitted from the motor M serving as a driving source via a drive transmission unit DT including a torsion spring 40, i.e., torsion coil spring, to the pressure roller 23b. The intermediate transfer belt 13 according to the present embodiment rotates by the belt driving roller 14 being rotated by the driving force transmitted from the motor M serving as a common driving source.

### Drive Transmission Unit

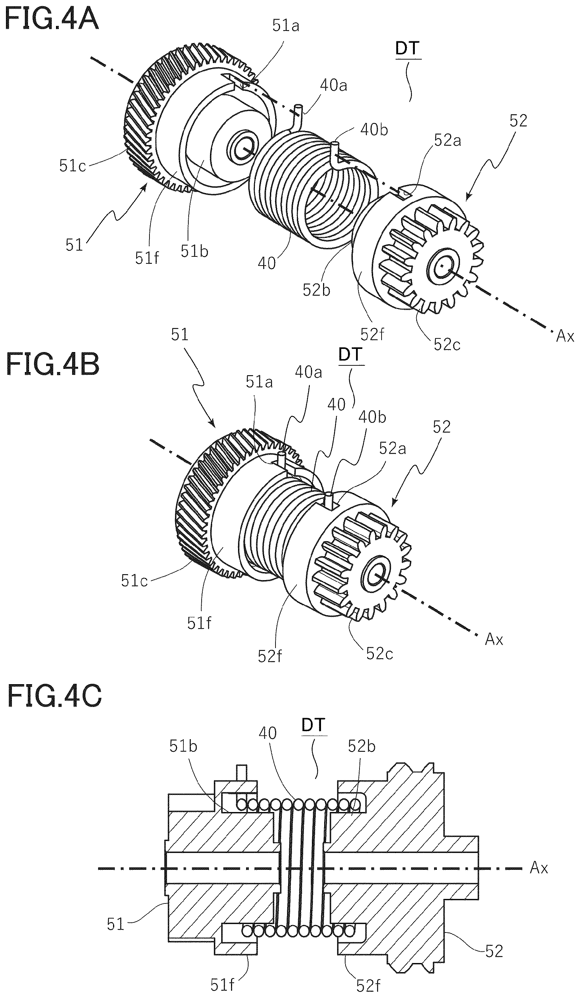

The drive transmission unit DT including the torsion spring 40 will be described with reference to FIG. 3A and FIGs. 4A to 4C. FIG. 4A is an exploded view of the drive transmission unit DT. FIG. 4B is a perspective view of the drive transmission unit DT. FIG. 4C is a cross-sectional view of the drive transmission unit DT.

The drive transmission unit DT includes an input gear 51 serving as a first rotary member, i.e., input-side rotary member, an output gear 52 serving as a second rotary member, i.e., output-side rotary member, and the torsion spring 40 serving as an elastic member.

The input gear 51 is connected to the motor M serving as a driving source, and rotates by the driving force of the motor M. That is, the input gear 51 is configured such that at least a portion of the driving force output from the motor M is entered to the input gear 51. The input gear 51 and the motor M may be connected via a drive transmission mechanism such as a gear train or a belt drive mechanism, or may be engaged directly.

The output gear 52 is connected to the pressure roller 23b serving as a first conveyance member. The pressure roller 23b is configured to rotate by the driving force of the motor M transmitted via the output gear 52. The output gear 52 and the pressure roller 23b may be connected via a drive transmission mechanism such as a gear train or a belt drive mechanism, or may be engaged directly.

The torsion spring 40 is a spring member that elastically deforms according to a force, i.e., torque, in a rotational direction about a center axis. One end of the torsion spring 40 is engaged with the input gear 51 and the other end thereof is engaged with the output gear 52. The center axis of the torsion spring 40 may be common with a rotational axis Ax of the input gear 51 and the output gear 52. The torsion spring 40 transmits the torque received from the input gear 51 to the output gear 52. That is, the driving force of the motor M is transmitted via the torsion spring 40 from the input gear 51 to the output gear 52.

According to the present embodiment, the input gear 51, the torsion spring 40, and the output gear 52 are rotated about a common rotational axis Ax.

As illustrated in FIG. 4A, arm portions 40a and 40b are formed on both ends of the torsion spring 40. Further, the torsion spring 40 includes a coil portion in which a metal spring wire is wound around helically between the arm portions 40a and 40b. The torsion spring 40 is arranged such that the coil portion extends in the direction of the rotational axis Ax while circling around the rotational axis Ax. That is, the coil portion is wound around the rotational axis Ax. More specifically, the number of turns of the coil portion around the rotational axis Ax is 2 or more. The torsion spring 40 may be a wire member, i.e., formed wire spring, in which the arm portions 40a and 40b are formed of a common spring wire as the coil portion. That is, the torsion spring 40 is configured to be deflected around the rotational axis Ax.

A spring hook portion, i.e., first engagement portion, 51a engaged to one arm portion 40a of the torsion spring 40 is disposed on the input gear 51. A spring hook portion, i.e., second engagement portion, 52a engaged to the other arm portion 40b of the torsion spring 40 is disposed on the output gear 52. The spring hook portion 52a according to the present embodiment is a groove portion that extends in a direction along a virtual line orthogonal to the rotational axis Ax, i.e., a rotation radius direction of the input gear 51 and the output gear 52.

As illustrated in FIGs. 4B and 4C, regarding the direction of the rotational axis Ax, the arm portion 40a and the spring hook portion 51a are disposed at a position distant from the arm portion 40b and the spring hook portion 52a. Further, the input gear 51 and the output gear 52 are positioned distant from each other with respect to the direction of the rotational axis Ax.

By the engagement of the arm portion 40a and the spring hook portion 51a of the input gear 51, one end of the torsion spring 40 is prevented from rotating relatively with respect to the input gear 51. By the engagement of the arm portion 40b and the spring hook portion 52a of the output gear 52, the other end of the torsion spring 40 is prevented from rotating relatively with respect to the output gear 52. Further, by the change of angular deflection of the torsion spring 40, relative rotation of the input gear 51, i.e., first rotary member, and the output gear 52, i.e., second rotary member, is allowed. In other words, the sheet conveyance apparatus is configured such that the input gear 51, i.e., first rotary member, and the output gear 52, i.e., second rotary member, are allowed to rotate relatively by the change of angular deflection of the torsion spring 40.

The method for engaging or fixing one end and the other end of the torsion spring 40 with the input gear 51 and the output gear 52 is not limited to the above, and for example, both end portions of the coil portion may be fit by interference fitting to recess portions formed on both gears. Furthermore, the one end and the other end of the coil portion of the torsion spring 40 may be fixed to the input gear 51 and the output gear 52 using an adhesive. That is, the engagement between the torsion spring 40 and the input gear 51 and the engagement between the torsion spring 40 and the output gear 52 are maintained while the input gear 51 rotates by the driving force of the motor M.

As illustrated in FIGs. 4A to 4C, the input gear 51 includes the spring hook portion 51a, a cylindrical portion 51b, a gear portion 51c, and an outer circumference portion 51f. The input gear 51 may be an integrally molded product in which the spring hook portion 51a, the cylindrical portion 51b, the gear portion 51c, and the outer circumference portion 51f are formed of a same resin material.

The cylindrical portion 51b of the input gear 51 is formed in an approximately cylindrical or approximately columnar shape with the rotational axis Ax set at the center. The outer circumference portion 51f is formed approximately cylindrically with the rotational axis Ax set at the center so as to surround the outer circumference of the cylindrical portion 51b. The spring hook portion 51a is a groove shaped portion formed on the outer circumference portion 51f, which is a groove extending in a direction intersecting with a virtual circle having the rotational axis Ax set at the center. The gear portion 51c is designed to receive a driving force from the motor M. Specifically, the gear portion 51c is designed to mesh with a counterpart gear that rotates by the driving force transmitted from the motor M.

The output gear 52 includes the spring hook portion 52a, a cylindrical portion 52b, a gear portion 52c, and an outer circumference portion 52f. The output gear 52 may be an integrally molded product in which the spring hook portion 52a, the cylindrical portion 52b, the gear portion 52c, and the outer circumference portion 52f are formed of a same resin material.

The cylindrical portion 52b of the output gear 52 is formed in an approximately cylindrical or approximately columnar shape with the rotational axis Ax set at the center. The outer circumference portion 52f is formed approximately cylindrically with the rotational axis Ax set at the center so as to surround the outer circumference of the cylindrical portion 52b. The spring hook portion 52a is a groove shaped portion formed on the outer circumference portion 52f, which is a groove extending in a direction intersecting with a virtual circle with the rotational axis Ax set at the center. The gear portion 52c is designed to output a driving force to the pressure roller 23b. Specifically, the gear portion 52c is designed to mesh with a counterpart gear that corotates with the pressure roller 23b.

The torsion spring 40 is attached in a state where one end of the coil portion is accommodated in the groove portion between the cylindrical portion 51b and the outer circumference portion 51f of the input gear 51, and the other end of the coil portion is accommodated in the groove portion between the cylindrical portion 52b and the outer circumference portion 52f of the output gear 52. By having the coil portion fit to the groove portions between the cylindrical portions 51b and 52b and the outer circumference portions 51f and 52f, the position of the torsion spring 40 is roughly determined with respect to the radius of the virtual circle about the rotational axis Ax.

Since the inner diameter of the coil portion fluctuates by elastic deformation, i.e., deflection, when load is applied on the torsion spring 40, it may be preferable that the outer diameters of the cylindrical portions 51b and 52b are smaller than the inner diameter of the coil portion in an unloaded state. Further, the inner diameters of the outer circumference portions 51f and 52f may preferably be greater than the outer diameter of the coil portion in the unloaded state.

Further, by having the arm portion 40a on one end of the torsion spring 40 fit to the spring hook portion 51a of the input gear 51, relative rotation of the one end of the torsion spring 40 against the input gear 51 is restricted. Similarly, by having the arm portion 40b on the other end of the torsion spring 40 fit to the spring hook portion 52a of the output gear 52, relative rotation of the other end of the torsion spring 40 against the output gear 52 is restricted.

When the motor M is started, a torque is entered to the gear portion 51c as a driving force of the motor M, and the input gear 51 starts to rotate. Meanwhile, the output gear 52 attempts to stop without being rotated, mainly due to inertia of the pressure roller 23b. Therefore, a load in the rotational direction about the rotational axis Ax is applied on the torsion spring 40. Due to this load, a torsional moment to twist the torsion spring 40 is generated between the arm portion 40a on one end and the arm portion 40b on the other end. In other words, the load torque of the pressure roller 23b that the torsion spring 40 receives from the output gear 52 and the driving force of the motor M that the torsion spring 40 receives from the input gear 51 are toward mutually opposite rotational directions about the rotational axis Ax. Thus, a deflection of the torsion spring 40 occurs when the motor M is started.

As the angular deflection of the torsion spring 40 increases, the torque received by the output gear 52 increases by having the arm portion 40b of the torsion spring 40 press the spring hook portion 52a. In a state where this torque exceeds the load torque of the pressure roller 23b, the output gear 52 and the pressure roller 23b start to rotate. As described above, there is a dispersion in the torque value required to rotate the pressure roller 23b. That is, the value of the load torque of the pressure roller 23b which is a torque that the output gear 52 receives from the torsion spring 40 and which is a minimum value of the torque capable of rotating the pressure roller 23b is dispersed.

Aspring constant of the torsion spring 40 is, for example, 0.01 kgf cm/°. In this case, if the load torque of the pressure roller 23b is 2 kgf cm, the pressure roller 23b starts to rotate when the torsion spring 40 is deflected for 200° after the motor M is started. If the load torque of the pressure roller 23b is 3.5 kgf cm, the pressure roller 23b starts to rotate when the torsion spring 40 is deflected for 350° after the motor M is started.

Even after the pressure roller 23b has started rotating, the torsion spring 40 continuously receives the driving force of the motor M and the load torque of the pressure roller 23b, such that the pressure roller 23b starts to rotate in a deflected state. The magnitude of elastic force, i.e., restoring force, that the torsion spring 40 applies on the output gear 52 is approximately proportional to the angular deflection of the torsion spring 40. That is, the torque of the magnitude corresponding to the angular deflection, i.e., deformation amount, of the torsion spring 40 is transmitted from the input gear 51 to the output gear 52. A product of the angular deflection and the spring constant of the torsion spring 40 when the pressure roller 23b is constantly rotating is equivalent to the load torque of the pressure roller 23b.

FIGs. 2A to 2E illustrate conveyance states of the sheet S between the transfer nip Nt and the fixing nip Nf. FIG. 2A illustrates a state in which the peripheral speed VB of the intermediate transfer belt 13 and the peripheral speed VF of the pressure roller 23b are equal. FIG. 2B illustrates a state according to the configuration of a comparative example in which the peripheral speed VF of the pressure roller 23b is 3% faster than the peripheral speed VB of the intermediate transfer belt 13. FIG. 2C illustrates a state according to the drive configuration of the present embodiment in which the peripheral speed VF of the pressure roller 23b is 3% faster than the peripheral speed VB of the intermediate transfer belt 13. FIG. 2D illustrates a state according to the drive configuration of the present embodiment in which a leading edge of the sheet S has reached the fixing nip Nf and before a trailing edge of the sheet S passes through the transfer nip Nt from the state of FIG. 2C. FIG. 2E illustrates a state according to the drive configuration of the present embodiment in which the trailing edge of the sheet S has passed through the fixing nip Nf from the state of FIG. 2D.

The configuration of the comparative example (FIG. 2B) differs from the present embodiment in that it is not equipped with the torsion spring 40. That is, according to the present comparative example, it is equivalent to a configuration in which the input gear 51 and the output gear 52 in the drive transmission unit DT (FIGs. 4A to 4C) of the first embodiment are engaged in a relatively non-rotatable manner. The configurations of the present comparative example other than the point that it is not equipped with the torsion spring 40 are similar to the present embodiment.

According to design, even if the peripheral speed VF of the pressure roller 23b is set to an equal value as the peripheral speed VB of the intermediate transfer belt 13 (FIG. 2A), it may be possible that the peripheral speed VF of the pressure roller 23b becomes faster than the peripheral speed VB of the intermediate transfer belt 13 for reasons such as thermal expansion described above (FIG. 2B). If VF is faster than VB, in a state where the sheet S is nipped by both the transfer nip Nt and the fixing nip Nf, the pressure roller 23b attempts to convey the sheet S for a distance longer than the distance in which the sheet S is conveyed by the transfer nip Nt. As a result, pulling of the sheet S may occur between the transfer nip Nt and the fixing nip Nf. In this case, based on the differences of the holding forces Ff and Ft described above, the sheet S may slip against the intermediate transfer belt 13.

According to the present embodiment, by disposing the torsion spring 40 on the drive transmission path from the motor M to the pressure roller 23b, a configuration is realized where drive is transmitted while the angular velocity of the output gear 52 is allowed to be delayed with respect to the angular velocity of the input gear 51. That is, during a period of time when the sheet S is nipped by both the transfer nip Nt and the fixing nip Nf, the peripheral speed VF of the pressure roller 23b is allowed to be slower (FIG. 2D) compared to a state prior to reaching of the sheet S to the fixing nip Nf (FIG. 2C) due to the deformation of the torsion spring 40. Thereby, deviation of conveyance amount between the intermediate transfer belt 13 and the pressure roller 23b can be absorbed.

A general criterion of the conveyance amount absorbed by the torsion spring 40 is set to 9 mm in the present example, since in a state where VF is 3% faster than VB, the pressure roller 23b rotates for a circumferential surface movement distance (306 mm) that is approximately 9 mm greater than the intermediate transfer belt 13 while the intermediate transfer belt 13 rotates for a circumferential surface movement distance (297 mm) corresponding to a long side of an A4 size sheet. However, in the present description, the distance from the transfer nip Nt to the fixing nip Nf is ignored. Further, the general criterion of the deviation of conveyance amount to be absorbed by the torsion spring 40 is not limited to 9 mm, and it may be varied according to the actual configuration of the image forming apparatus 100.

If the circumferential surface movement distance of the pressure roller 23b is allowed to be 9 mm shorter due to the deformation of the torsion spring 40, the slipping of the sheet S against the intermediate transfer belt 13 may be suppressed. If the diameter of the pressure roller 23b is 20 mm, it is sufficient to delay the rotation of the pressure roller 23b by approximately 50° in the rotational angle of the pressure roller 23b. That is, compared to a case where the input gear 51 and the output gear 52 rotate regularly, the input gear 51 and the output gear 52 are allowed to relatively rotate such that the rotation amount of the pressure roller 23b becomes 50° smaller.

As described above, when the pressure roller 23b is rotating regularly, the torsion spring 40 is deformed by an angular deflection according to the load torque of the pressure roller 23b. By further deflection of the torsion spring 40 from this state, the delay of rotation of the pressure roller 23b is allowed.

In a state where the pressure roller 23b and the output gear 52 are arranged coaxially and rotated integrally, if the rotation of the pressure roller 23b is delayed by 50°, the rotation of the output gear 52 is also delayed by 50° with respect to the input gear 51. That is, the output gear 52 relatively rotates for 50° with respect to the input gear 51. According to the deflection of the torsion spring 40 accompanying this relative rotation, the torsion spring 40 generates additive torque. If the spring constant is 0.01 kgf cm/°, the additive torque generated by the torsion spring 40 accompanying a state where the rotation of the pressure roller 23b is delayed by 50° is 0.5 kgf cm.

That is, if the rotation of the pressure roller 23b is delayed by 50° by the deformation of the torsion spring 40, a torque greater by 0.5 kgf cm than the original load torque is applied to the pressure roller 23b. Therefore, if the diameter of the pressure roller 23b is set to 20 mm, tension of a maximum of 0.5 kgf (Fft of FIG. 2D) is applied to the sheet S according to calculation.

In other words, as illustrated in FIG. 2D, while the sheet S is nipped by both the transfer nip Nt and the fixing nip Nf, the angular deflection of the torsion spring 40 becomes gradually greater. Then, according to the increase in angular deflection of the torsion spring 40, a tension Fft is caused in the sheet S between the transfer nip Nt and the fixing nip Nf, the general criterion of the maximum value thereof being 0.5 kgf.

Meanwhile, a holding force of the sheet S at the transfer nip Nt is approximately 1 kgf according to the example described above, which is greater than the maximum value of the tension Fft occurring in the sheet S. Therefore, even if the angular deflection of the torsion spring 40 is increased while the sheet S is nipped by both the transfer nip Nt and the fixing nip Nf, the slipping of the sheet S against the intermediate transfer belt 13 may be prevented, and the occurrence of image defects may be prevented.

Thereafter, as shown in FIG. 2E, when the trailing edge of the sheet S passes through the transfer nip Nt, the sheet S is released from the tension Fft, and the angular deflection of the torsion spring 40 starts to decrease. That is, in the state of FIG. 2D, the torsion spring 40 is deformed by such an angular deflection in which the torque applied on the output gear 52 by the elastic force of the torsion spring 40 is balanced with a sum of the original load torque of the pressure roller 23b and the torque applied on the pressure roller 23b from the sheet S by the tension Fft. Meanwhile, in the state of FIG. 2E, the angular deflection of the torsion spring 40 is reduced to an angular deflection in which the torque applied on the output gear 52 by the elastic force of the torsion spring 40 is balanced with the load torque of the pressure roller 23b.

Therefore, when the trailing edge of the sheet S passes through the transfer nip Nt, the pressure roller 23b temporarily rotates at the peripheral speed VF that is faster than the peripheral speed VF (FIG. 2C) before the leading edge of the sheet S has reached the fixing nip Nf.

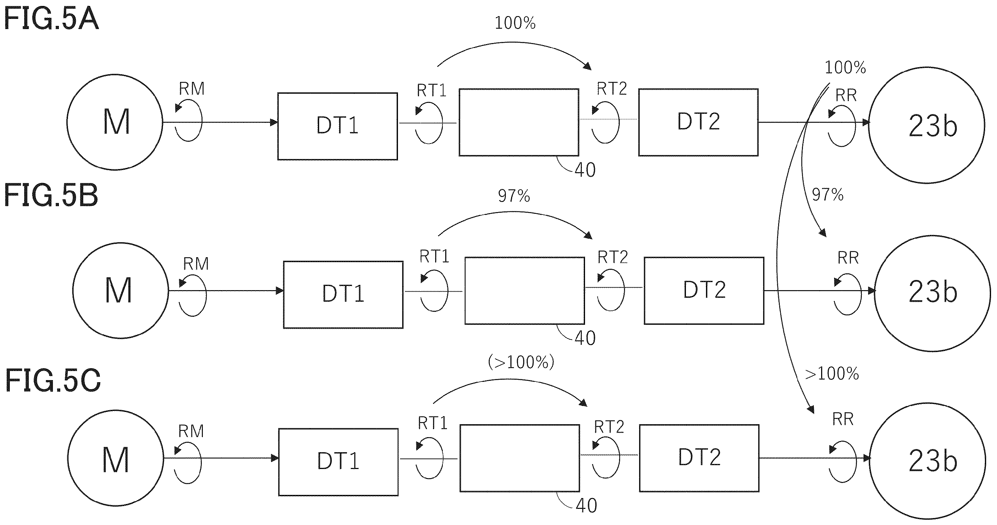

The variation of angular velocity of the element participating in drive transmission from the motor M to the pressure roller 23b according to the present embodiment will be described with reference to FIGs. 5A to 5C.

FIG. 5A corresponds to FIG. 2C, and illustrates a state after the leading edge of the sheet S has passed through the transfer nip Nt and before the leading edge of the sheet S reaches the fixing nip Nf. FIG. 5B corresponds to FIG. 2D, and illustrates a state after the leading edge of the sheet S reaches the fixing nip Nf and before the trailing edge of the sheet S has passed through the transfer nip Nt. FIG. 5C corresponds to FIG. 2E, and illustrates a state after the trailing edge of the sheet S has passed through the transfer nip Nt and before the trailing edge of the sheet S passes through the fixing nip Nf.

In FIGs. 5A to 5C, the angular velocity of the output shaft of the motor M is referred to as RM, and the angular velocity of the pressure roller 23b is referred to as RR. The angular velocity of an input side, i.e., the arm portion 40a, of the torsion spring 40 is referred to as RT1, and the angular velocity of an output side, i.e., the arm portion 40b, of the torsion spring 40 is referred to as RT2. The angular velocity RT1 of the input side of the torsion spring 40 is determined based on the angular velocity RM of the output shaft of the motor M, and a reduction ratio of a drive transmission mechanism DT1 from the output shaft of the motor M to the input gear 51. The angular velocity RR of the pressure roller 23b is determined based on the angular velocity RT2 on the output side of the torsion spring 40 and a reduction ratio of a drive transmission mechanism DT2 from the output gear 52 to the pressure roller 23b.

As illustrated in FIG. 5A, in the state of FIG. 2C before the leading edge of the sheet S has reached the fixing nip Nf, the angular velocity RT2 of the output side of the torsion spring 40 is equal to the angular velocity RT1 of the input side.

As illustrated in FIG. 5B, in the state of FIG. 2D where the sheet S is nipped by both the transfer nip Nt and the fixing nip Nf, the angular velocity RR of the pressure roller 23b is delayed for example by 3% compared to the state of FIG. 5A. Further, due to the elastic deformation of the torsion spring 40, the angular velocity RT2 of the output side of the torsion spring 40 is allowed to be delayed for example by 3% than the angular velocity RT1 of the input side of the torsion spring 40. In this state, the output gear 52 is rotated at a speed slower than the input gear 51. That is, owing to the elastic deformation of the torsion spring 40, the difference in peripheral speed of the pressure roller 23b and the intermediate transfer belt 13 is absorbed.

A peripheral speed of the outer circumference surface 23b1 of the pressure roller 23b in a state (first state) where the pressure roller 23b and the intermediate transfer belt 13 are driven by the motor M and the sheet S is separated from at least either one of the outer circumference surface 23b1, i.e., first contact surface, of the pressure roller 23b and the outer circumference surface 13a, i.e., second contact surface, of the intermediate transfer belt 13 is referred to as a first speed. Similarly, a peripheral speed of the outer circumference surface 13a of the intermediate transfer belt 13 is referred to as a second speed. The second speed differs from the first speed. For example, in the state illustrated in FIG. 2C, the peripheral speed VF, i.e., first speed, of the outer circumference surface 23b1 of the pressure roller 23b is a speed that differs from the peripheral speed VB, i.e., second speed, of the outer circumference surface 13a of the intermediate transfer belt 13. In this case, as illustrated in FIG. 2D, in a state (second state) where the pressure roller 23b and the intermediate transfer belt 13 are driven by the motor M and the sheet S is in contact with both the pressure roller 23b and the intermediate transfer belt 13, the torsion spring 40 deforms. Due to this deformation, the torsion spring 40 allows the peripheral speed VF of the outer circumference surface 23b1 of the pressure roller 23b to be a peripheral speed, i.e., third speed, closer to the peripheral speed VB, i.e., second speed, of the outer circumference surface 13a of the intermediate transfer belt 13 than the speed, i.e., first speed, illustrated in the state of FIG. 2C. That is, the difference between the third speed and the second speed is smaller than the difference between the first speed and the second speed. The third speed may be equal to the second speed. Thereby, it becomes possible to suppress the speed difference between the outer circumference surface 23b1 of the pressure roller 23b and the outer circumference surface 13a of the intermediate transfer belt 13 in the state of FIG. 2C from affecting the stability of conveyance of the sheet S.

A position at which the sheet S and the intermediate transfer belt 13 come into contact is referred to as a contact position. In a state where the sheet S is in contact with both the pressure roller 23b and the intermediate transfer belt 13, by deformation of the torsion spring 40, a state in which a difference between the moving velocity of the sheet S at the contact position and the peripheral speed VB of the outer circumference surface 13a of the intermediate transfer belt 13, i.e., first speed difference, is smaller than a difference between the peripheral speed VF of the outer circumference surface 23b1 of the pressure roller 23b and the peripheral speed VB of the outer circumference surface 13a of the intermediate transfer belt 13, i.e., second speed difference, is maintained. That is, a state in which a relative slipping of the sheet S and the intermediate transfer belt 13 at the transfer nip Nt is at least smaller than the difference between the peripheral speed VF of the outer circumference surface 23b1 of the pressure roller 23b and the peripheral speed VB of the outer circumference surface 13a of the intermediate transfer belt 13 is maintained. In other words, the sheet conveyance apparatus is configured such that by the torsion spring 40 deforming in a state where the sheet S is in contact with both the pressure roller 23b and the intermediate transfer belt 13, a state in which the first speed difference is smaller than the second speed difference is maintained.

As illustrated in FIG. 5C, in the state of FIG. 2E after the trailing edge of the sheet S has passed through the transfer nip Nt, the angular velocity RR of the pressure roller 23b becomes faster than the state of FIG. 5A. Further, the angular velocity RT2 of the output side of the torsion spring 40 becomes faster than the angular velocity RT1 of the input side of the torsion spring 40. This is because when the trailing edge of the sheet S has passed through the transfer nip Nt and tension is released, a part of the elastic deformation of the torsion spring 40 is restored, such that the output side of the torsion spring 40 temporarily rotates faster than the input side. In this state, the output gear 52 rotates faster than the input gear 51. Further, if the angular deflection of the torsion spring 40 becomes equal to the regular state of FIG. 5A, the angular velocity RR of the pressure roller 23b and the angular velocity RT2 of the output side of the torsion spring 40 will be equal to the state of FIG. 5A.

In the above description, a case in which the pressure roller 23b rotates at a peripheral speed 3% faster than that of the intermediate transfer belt 13 due to thermal expansion has been illustrated as an example. However, even in a case where the speed difference of the pressure roller 23b with respect to the intermediate transfer belt 13 is about 0.5%, if the sheet S is conveyed for 100 mm in a state where the sheet S is nipped by both the transfer nip Nt and the fixing nip Nf, a deviation of conveyance amount of 0.5 mm occurs. Even according to such a relatively small deviation of conveyance amount, the slipping of the sheet S against the intermediate transfer belt 13 and image defects occurring therefrom may be caused. That is, even in a case where the speed difference of the pressure roller 23b against the intermediate transfer belt 13 is relatively small, a configuration adopting the torsion spring 40 according to the present embodiment is useful.

According to the above description, a thermal expansion of the pressure roller 23b is illustrated as a cause by which the peripheral speed difference between the pressure roller 23b and the intermediate transfer belt 13 is generated, but the cause of peripheral speed difference is not limited thereto. For example, the peripheral speed difference between the pressure roller 23b and the intermediate transfer belt 13 may be caused by abrasion of an outer circumference portion of the belt driving roller 14. Even according to this case, the configuration adopting the torsion spring 40 of the present embodiment is useful.

The following is a summary of the configuration described above. If the state of the torsion spring 40 in the unloaded state is referred to as a free state, while the input gear 51 rotates by the driving force of the motor M, the torsion spring 40 will be in a deformed state deformed from the free state. In this state, the torsion spring 40 is in a state deformed within an elastic region. In other words, even if the angular velocity RR of the pressure roller 23b is in a constant state, while the pressure roller 23b is rotating, the torsion spring 40 will be in a deformed state deformed within the elastic region. In this state, the torsion spring 40 is in a state elastically deformable toward the downstream side and the upstream side in the rotation direction of the input gear 51.

For example, in the state of FIG. 2D in which the sheet S is nipped by both the transfer nip Nt and the fixing nip Nf, a state occurs in which the angular velocity of the output gear 52 is slower than the angular velocity of the input gear 51 while the driving force of the motor M is entered to the input gear 51. According to the drive transmission unit DT of the present embodiment, by having the torsion spring 40 deform in a state where the angular velocity of the output gear 52 is slower than the angular velocity of the input gear 51 while the driving force of the motor M is entered to the input gear 51, the pressure roller 23b is allowed to rotate.

For example, in the state of FIG. 2E after the trailing edge of the sheet S has passed through the transfer nip Nt, a state occurs in which the angular velocity of the output gear 52 is faster than the angular velocity of the input gear 51 while the driving force of the motor M is entered to the input gear 51. According to the drive transmission unit DT of the present embodiment, the pressure roller 23b is allowed to rotate in a state where the angular velocity of the output gear 52 is faster than the angular velocity of the input gear 51 while the driving force of the motor M is entered to the input gear 51.

### Advantages of Present Embodiment

As described above, drive transmission from the motor M to the pressure roller 23b, i.e., first conveyance member, is allowed in a state where the angular velocity of the output gear 52, i.e., second rotary member, differs from the angular velocity of rotation entered to the input gear 51, i.e., first rotary member, due to the elastic deformation of the torsion spring 40, i.e., elastic member. In other words, the torsion spring 40, i.e., elastic member, is deformable to allow the pressure roller 23b, i.e., first conveyance member, to rotate in a state where the angular velocity of the input gear 51, i.e., first rotary member, driven by the motor M and the angular velocity of the output gear 52, i.e., second rotary member, differ from each other. The sheet conveyance apparatus according to the present embodiment is configured to allow the driving force of the driving source to be transmitted to the first conveyance member in a state where the angular velocity of the second rotary member is slower than the angular velocity of the first rotary member by deformation of the elastic member. Further, the sheet conveyance apparatus according to the present embodiment is configured to allow the driving force of the driving source to be transmitted to the first conveyance member in a state where the angular velocity of the second rotary member is faster than the angular velocity of the first rotary member.

According to this configuration, in a state where there is a difference in peripheral speed between the pressure roller 23b, i.e., first conveyance member, and the intermediate transfer belt 13, i.e., second conveyance member, the torsion spring 40 is elastically deformed in a state where the sheet S is in contact with both the pressure roller 23b and the intermediate transfer belt 13. Thereby, the pressure roller 23b is allowed to rotate at a peripheral speed that corresponds to the peripheral speed of the intermediate transfer belt 13. As a result, drawbacks caused by the pulling of the sheet S or the slacking of the sheet S between the pressure roller 23b and the intermediate transfer belt 13 may be suppressed.

That is, according to the present embodiment, a sheet conveyance apparatus and an image forming apparatus capable of conveying the sheet more stably may be provided.

A technique of suppressing slacking, i.e., looped amount, of the sheet S between the transfer nip Nt and the fixing nip Nf is known as a method for suppressing the speed difference between the pressure roller 23b and the intermediate transfer belt 13. However, in order to control the looped amount, there is a need to provide a sensor for detecting the looped amount and two independent drive systems for driving the fixing unit and the transfer respectively, by which costs are increased. In contrast, according to the present embodiment, a sheet conveyance apparatus and an image forming apparatus capable of conveying the sheet more stably with a simpler configuration can be provided.

According further to the present embodiment, if a state in which the sheet S is in contact with both the pressure roller 23b and the intermediate transfer belt 13 is continued, a phase difference, i.e., positional deviation in the rotational direction, of the output gear 52 with respect to the input gear 51 is increased. As a result, the angular deflection, i.e., deformation amount, of the torsion spring 40 is continuously varied in a state where the sheet S is in contact with both the pressure roller 23b and the intermediate transfer belt 13 (FIG. 2D). In other words, the sheet conveyance apparatus of the present embodiment including the torsion spring 40 is configured such that the angular deflection, i.e., deformation amount, of the torsion spring 40 is continuously varied in a state where the sheet S is in contact with both the pressure roller 23b and the intermediate transfer belt 13.

A state in which the sheet S is nipped by the intermediate transfer belt 13 and the secondary transfer roller 22 and also nipped by the pressure roller 23b and the fixing film assembly 23a is referred to as a double nipped state or simply a nipped state for convenience. Further, after the double nipped state is started, a position of the sheet S when the nipped state is released, that is, the position of the sheet S when the double nipped state is ended, is referred to as a release position or end position. A state in which the angular velocity of the input gear 51 and the angular velocity of the output gear 52 differ from each other is referred to as a different-velocity state. According to the present embodiment, when the sheet S reaches the release position, a state in which the sheet S is nipped by the intermediate transfer belt 13 and the secondary transfer roller 22 is terminated. That is, the trailing edge of the sheet S has passed through the transfer nip Nt.

The torsion spring 40 is deformable such that the different-velocity state is continued after the different-velocity state is started until at least the sheet S reaches the release position. In other words, the torsion spring 40 is deformable such that when the sheet S reaches the release position, the input gear 51 and the output gear 52 are in a different-velocity state. More specifically, the torsion spring 40 is deformable such that when the sheet S reaches the release position, the angular velocity of the output gear 52 is slower than the angular velocity of the input gear 51. In other words, the torsion spring 40 allows a state in which the angular velocity of the output gear 52 is slower than the angular velocity of the input gear 51 when the sheet S has reached the release position. Further, after the sheet S has passed through the release position, until the deformation of the torsion spring 40 is restored, a state in which the angular velocity of the input gear 51 and the angular velocity of the output gear 52 differ from each other is continued. Now, a sheet having a longest length in the conveyance direction of the sheet S among the sheets capable of being stored in the feeding tray 19 is referred to as a longest sheet. The torsion spring 40 is configured such that the deformation amount increases until the trailing edge of the longest sheet separates from the intermediate transfer belt 13. The torsion spring 40 is deformable such that in a state where the longest sheet is conveyed as the sheet S and a different-velocity state is started, the different-velocity state is continued until at least the sheet S reaches the release position.

As described above, regarding the direction of the rotational axis Ax, the arm portion 40a and the spring hook portion 51a are arranged at a position distant from the arm portion 40b and the spring hook portion 52a. Further, regarding the direction of the rotational axis Ax, the input gear 51 and the output gear 52 are arranged at positions distant from each other. Further, the torsion spring 40 is a torsion coil spring that is configured to be deflected about the rotational axis Ax. According to these configurations, the number of turns of the torsion spring 40 may be increased, and as a result, the spring constant of the torsion spring 40 may be reduced. That is, until the sheet S reaches the release position, a state in which the deformation of the torsion spring 40 varies continuously, that is, the different-velocity state, may be continued. As a result, according to the present embodiment, it becomes possible to suppress the increase of restoring force of the torsion spring 40 with respect to the holding force of the sheet S at the transfer nip Nt.

By the deformation of the torsion spring 40, the difference between the peripheral speed VF of the outer circumference surface 23b1 of the pressure roller 23b and the peripheral speed VB of the outer circumference surface 13a of the intermediate transfer belt 13 in a state where the sheet S is in contact with both the pressure roller 23b and the intermediate transfer belt 13 becomes smaller than the difference between the peripheral speed VF of the outer circumference surface 23b1 of the pressure roller 23b and the peripheral speed VB of the outer circumference surface 13a of the intermediate transfer belt 13 in a state where the sheet S is separated from at least either one of the pressure roller 23b and the intermediate transfer belt 13. In the present embodiment, in a state where the sheet S is in contact with both the pressure roller 23b and the intermediate transfer belt 13, the pressure roller 23b is allowed to rotate continuously at a speed, i.e., third speed, corresponding to the peripheral speed VB of the intermediate transfer belt 13 by the deformation of the torsion spring 40.

The pressure roller 23b, i.e., first conveyance member, is arranged downstream of the intermediate transfer belt 13, i.e., second conveyance member, in the sheet conveyance direction. Further, in a state where the sheet S is separated from at least one of the pressure roller 23b and the intermediate transfer belt 13 (FIG. 2C), the peripheral speed VF, i.e., first speed, of the pressure roller 23b is faster than the peripheral speed VB, i.e., second speed, of the intermediate transfer belt 13. In such a case, according to the comparative example without the torsion spring 40, even in a state where the sheet S is in contact with both the pressure roller 23b and the intermediate transfer belt 13 as illustrated in FIG. 2B, the peripheral speed VF of the pressure roller 23b is maintained, and tension is applied on the sheet S. This tension may cause the sheet S to slip against the intermediate transfer belt 13, which may lead to the occurrence of image defects.

In contrast, according to the present embodiment, due to the deformation of the torsion spring 40, i.e., elastic member, the peripheral speed VF of the pressure roller 23b is slowed down in a state where the sheet S is in contact with both the pressure roller 23b and the intermediate transfer belt 13, as illustrated in FIG. 2D. That is, the peripheral speed VF of the pressure roller 23b is varied to a speed, i.e., third speed, slower than the speed in the state of FIG. 2C. In a state where the sheet S is in contact with both the pressure roller 23b and the intermediate transfer belt 13, the occurrence of image defects caused by having tension applied on the sheet S may be prevented.

### Configuration Example of Drive Transmission Path

A configuration example of a drive transmission path including the torsion spring 40 will be described with reference to FIGs. 3A and 3B. A modified example illustrated in FIG. 3C will be described below. The drive transmission path described here is a collection of a series of mechanical elements that connect the motor M serving as a driving source and a drive target, i.e., load or driven member, such as the pressure roller 23b, such that the driving force of the motor M, i.e., rotational torque generated by the motor M, is transmitted from the motor M to the drive target.

FIG. 3A is a schematic diagram illustrating a drive transmission path in the image forming apparatus 100 according to the first embodiment. The pressure roller 23b is connected to the motor M via the drive transmission unit DT including the torsion spring 40. Further, the belt driving roller 14 is connected to the motor M without interposing the drive transmission unit DT. Further, the driving roller, i.e., the sheet discharge roller 24a, of the sheet discharge roller pair 24 is connected to the motor M via the drive transmission unit DT. Therefore, the intermediate transfer belt 13, the pressure roller 23b, and the sheet discharge roller pair 24 are driven to rotate by the motor M.

According to the first embodiment, even if the peripheral speeds of the pressure roller 23b and the intermediate transfer belt 13 do not correspond due to thermal expansion of the roller, the speed difference may be absorbed by the deformation of the torsion spring 40, as described above. Thereby, the slipping of the sheet S against the intermediate transfer belt 13 may be suppressed.

Further, the configuration in which the belt driving roller 14 and the pressure roller 23b are driven by the same motor M as according to the first embodiment has the following advantages. A case is assumed where deformation of the torsion spring 40 has occurred and the tension Fft is applied on the sheet S between the transfer nip Nt and the fixing nip Nf, as illustrated in FIG. 2D. In this state, at the fixing nip Nf, a torque in an opposite direction as the drive direction of the pressure roller 23b is applied from the sheet S to the pressure roller 23b by the tension Fft of the sheet S. That is, the apparent load torque of the pressure roller 23b is increased.

Meanwhile, at the transfer nip Nt, a torque in the direction along the rotational direction of the belt driving roller 14 is applied from the sheet S to the intermediate transfer belt 13 by the tension of the sheet S. That is, the apparent load torque of the belt driving roller 14 is reduced.

Therefore, on the output shaft of the motor M, the variation of the apparent load torque of the pressure roller 23b and the variation of the apparent load torque of the belt driving roller 14 are cancelled by the tension Fft. Thus, compared to a case where the variation of apparent load torques of the pressure roller 23b and the belt driving roller 14 are not cancelled, the sheet S may be conveyed stably by using the motor M that is inexpensive and has a relatively small rated output.

Further, the torsion spring 40 has greater flexibility than a gear generally formed of metal or engineering plastic such as polyacetal, and functions to attenuate vibration of a high frequency band. By interposing the torsion spring 40 in the drive transmission path from the motor M to the pressure roller 23b, the vibration in the high frequency band between elements on the drive transmission path between the motor M and the pressure roller 23b can be attenuated. For example, a rotational vibration of the gear interposed between the motor M and the input gear 51 of the drive transmission unit DT is not easily transmitted to the pressure roller 23b.

FIG. 3B is a schematic diagram illustrating a drive transmission path in an image forming apparatus according to one modified example. The pressure roller 23b and the driving roller, i.e., sheet discharge roller 24a, of the sheet discharge roller pair 24 are connected to the motor M via the drive transmission unit DT including the torsion spring 40. Meanwhile, the belt driving roller 14 is connected to the motor M1, that is different from the motor M driving the pressure roller 23b.

As according to the modified example of FIG. 3B, even in a case where the belt driving roller 14 is driven by a driving source, i.e., the motor M1, independent from the driving source of the pressure roller 23b, i.e., the motor M, there may be a case where there is a peripheral speed difference between the pressure roller 23b and the intermediate transfer belt 13. In such a case, by absorbing the peripheral speed difference through the deformation of the torsion spring 40, an advantage similar to the first embodiment may be obtained.

### Modified Example of Torsion Spring

The following modified example may be provided as a configuration capable of further suppressing slipping of the sheet S against the intermediate transfer belt 13.

At first, reduction of spring constant of the torsion spring 40 may be considered. The smaller the spring constant of the torsion spring 40, the smaller the tension Fft applied on the sheet S in a state where the angular deflection of the torsion spring 40 increases (FIG. 2D) by the peripheral speed difference between the intermediate transfer belt 13 and the pressure roller 23b. However, the torsion spring 40 with a small spring constant may have its angular deflection easily increased, and a torsional stress exceeding a maximum allowable stress may be generated. Thus, it may be preferable to determine the spring constant by taking into consideration the maximum value of torque load of the pressure roller 23b and a maximum value of deviation of conveyance amounts between the intermediate transfer belt 13 and the pressure roller 23b.

A maximum value of angular deflection, i.e., deformation amount, of the torsion spring 40 from the state where the leading edge of the sheet S comes into contact with the pressure roller 23b until a state where the trailing edge of the sheet S separates from the pressure roller 23b may preferably be within 30% of angular deflection, i.e., deformation amount, corresponding to the maximum allowable stress of the torsion spring 40. As a result, at least when the sheet S has reached the release position, the angular deflection, i.e., deformation amount, of the torsion spring 40 will be within 30% of the angular deflection, i.e., deformation amount, corresponding to the maximum allowable stress of the torsion spring 40. In other words, the drive transmission path of the sheet conveyance apparatus may be preferably configured such that the maximum value of angular deflection during the above-mentioned period of time falls within 30% of the angular deflection corresponding to the maximum allowable stress of the torsion spring 40. The torsion spring 40 is deformable in a direction in which the deformation amount is increased in a state where the trailing edge of the longest sheet has reached the transfer nip Nt. The relationship between a maximum value of angular deflection of the torsion spring 40 described above and an angular deflection corresponding to the maximum allowable stress of the torsion spring 40 may be preferably satisfied even in a case where a longest sheet is conveyed.

Methods for reducing the stress applied on the spring wire of the torsion spring 40 include changing the material of the spring wire, increasing the wire diameter, or increasing the number of turns or the winding diameter. If the wire diameter is increased, the spring constant is increased thereby, so that it may be preferable to realize the adjustment by varying the material, the number of turns, or the winding diameter. That is, if the stress applied on the spring wire is reduced by varying the configuration of the torsion spring 40 itself, the size or cost of the torsion spring 40 may be increased.

### Example Adopting a Plurality of Torsion Springs

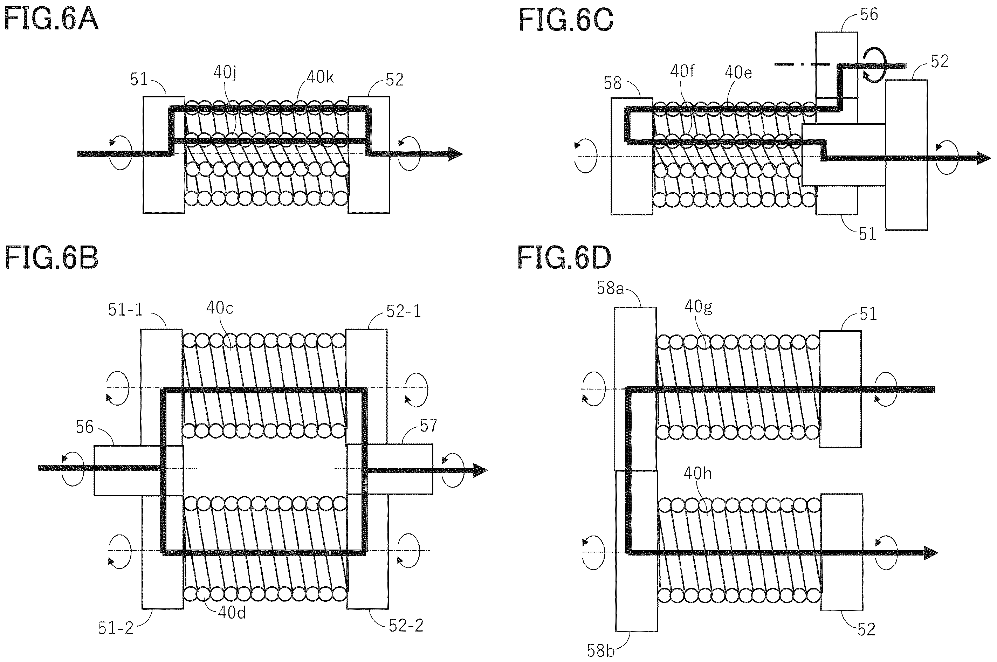

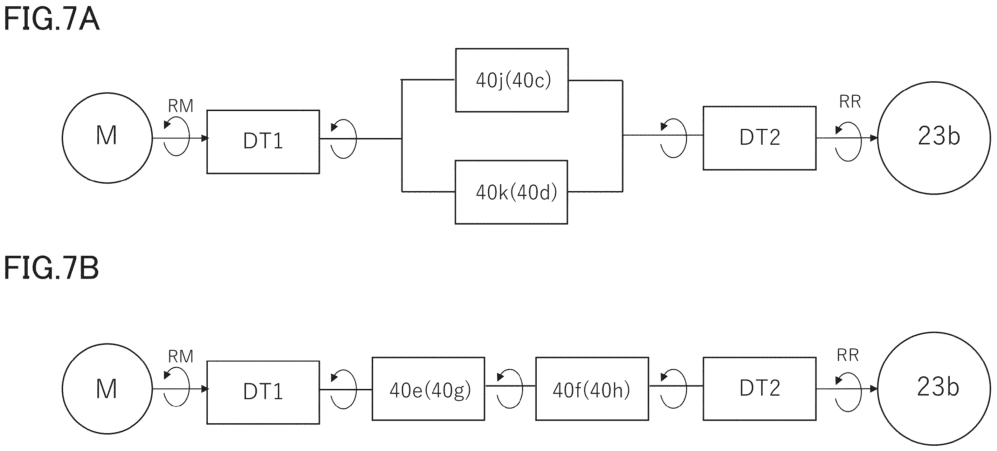

In order to prevent the increase in size or cost of the torsion spring 40, it may be possible to adopt a plurality of torsion springs, i.e., a plurality of elastic members. FIGs. 6A to 6D and FIGs. 7A and 7B respectively illustrate a modified example adopting a plurality of torsion springs. According to the respective modified examples of FIGs. 6A to 7B, stress applied on the individual torsion springs may be suppressed compared to the first embodiment.

In a state where first torsion springs 40j and 40c according to the modified examples of FIGs. 6A and 6B are referred to as a first elastic member, second torsion springs 40k and 40d are examples of a second elastic member. According to these examples, the second torsion springs 40k and 40d are disposed in parallel with the first torsion springs 40j and 40c in a transmission path of driving force from the driving source to the pressure roller 23b.

FIG. 6A illustrates one modified example in which a plurality of torsion springs are arranged in parallel, wherein the second torsion spring 40k is arranged on the inner side of the first torsion spring 40j. The first torsion spring 40j and the second torsion spring 40k are respectively engaged with the input gear 51 and the output gear 52. A portion of the driving force transmitted from the motor M to the input gear 51 is transmitted via the first torsion spring 40j to the output gear 52, and another portion of the driving force is transmitted via the second torsion spring 40k to the output gear 52.

FIG. 6B is one modified example in which a plurality of torsion springs are arranged in parallel, wherein the first torsion spring 40c and the second torsion spring 40d are rotated about different rotational axes. The driving force of the motor M is entered via a drive transmission member 56 to a first input gear 51-1 and a second input gear 51-2. Further, a first output gear 52-1 and a second output gear 52-2 are connected via a drive transmission member 57 to the pressure roller 23b. The first torsion spring 40c is engaged with the first input gear 51-1 and the first output gear 52-1. The second torsion spring 40d is engaged with the second input gear 51-2 and the second output gear 52-2. A portion of the driving force transmitted from the motor M to the input-side drive transmission member 56 is transmitted via the first torsion spring 40c to the output-side drive transmission member 57. Another portion of the driving force transmitted from the motor M to the input-side drive transmission member 56 is transmitted via the second torsion spring 40d to the output-side drive transmission member 57.

FIG. 7A is a schematic diagram illustrating a drive transmission path from the motor M to the pressure roller 23b in a case where a plurality of torsion springs are arranged in parallel, as in the case of FIGs. 6A and 6B. According to such modified examples, if a peripheral speed difference exists between the pressure roller 23b and the intermediate transfer belt 13, each of the plurality of torsion springs is elastically deformed to allow delay of angular velocity RR of the pressure roller 23b. Therefore, the slipping of the sheet S against the intermediate transfer belt 13 may be suppressed.

In a state where first torsion springs 40e and 40g according to the modified examples of FIGs. 6C and 6D are referred to as a first elastic member, second torsion springs 40f and 40h are examples of a second elastic member. According to these examples, the second torsion springs 40f and 40h are disposed in series with the first torsion springs 40e and 40g in a transmission path of driving force from the driving source to the pressure roller 23b.

FIG. 6C illustrates one modified example in which a plurality of torsion springs are arranged in series, wherein the second torsion spring 40f is disposed on the inner side of the first torsion spring 40e. The first torsion spring 40e is engaged with the input gear 51 and an intermediate gear 58. The second torsion spring 40f is engaged with the intermediate gear 58 and the output gear 52. The driving force transmitted from the motor M to the drive transmission member 56 is transmitted via the first torsion spring 40e to the intermediate gear 58, and further transmitted via the second torsion spring 40f to the output gear 52.

FIG. 6D illustrates one modified example in which a plurality of torsion springs are arranged in series, wherein the first torsion spring 40g and the second torsion spring 40h are arranged to rotate about mutually different rotational axes. The first torsion spring 40g is engaged with the input gear 51 and a first intermediate gear 58a. The second torsion spring 40h is engaged with a second intermediate gear 58b and the output gear 52. The first intermediate gear 58a is engaged with the second intermediate gear 58b. The driving force transmitted from the motor M to the input gear 51 is transmitted via the first torsion spring 40g to the first intermediate gear 58a, and further transmitted via the second torsion spring 40h to the output gear 52.

FIG. 7B is a schematic diagram illustrating a drive transmission path from the motor M to the pressure roller 23b in a case where a plurality of torsion springs are arranged in series, as according to FIGs. 6C and 6D. According to such modified examples, if a peripheral speed difference exists between the pressure roller 23b and the intermediate transfer belt 13, each of the plurality of torsion springs is elastically deformed to allow delay of angular velocity RR of the pressure roller 23b. Therefore, the slipping of the sheet S against the intermediate transfer belt 13 may be suppressed.

### Example of using Torque Limiter in Combination

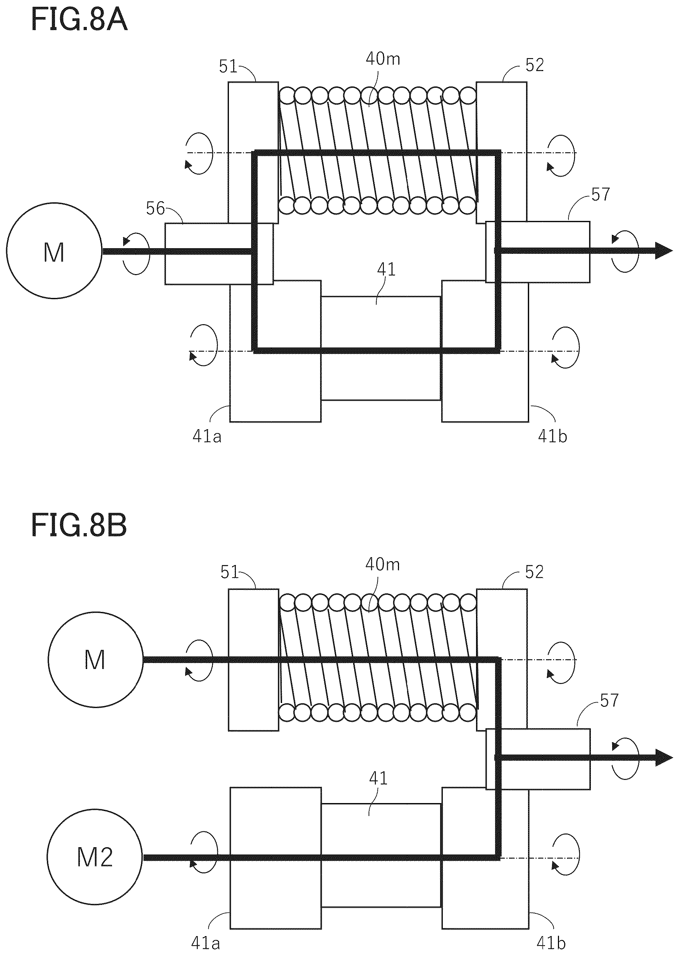

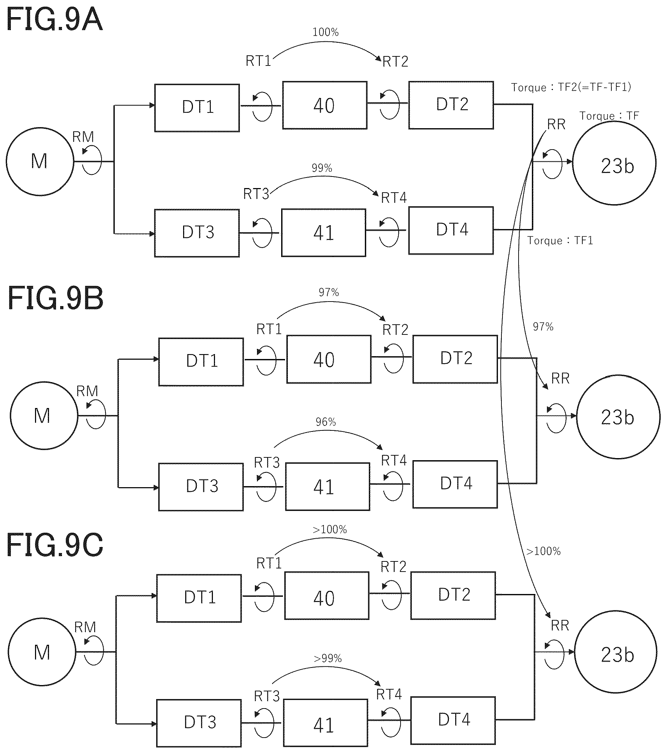

An example in which a torsion spring, i.e., elastic member, and a torque limiter are used in combination will be described with reference to FIGs. 8A and 8B and FIGs. 9A to 9C.

In the examples illustrated in FIGs. 8A and 8B, a torsion spring 40m and a torque limiter 41 are arranged in parallel. The torque limiter 41 includes a first rotation portion 41a and a second rotation portion 41b. The torque limiter 41 is configured to rotate integrally in a state where a rotation load between the first rotation portion 41a and the second rotation portion 41b is equal to or below a predetermined torque value, and to allow relative rotation of the first rotation portion 41a and the second rotation portion 41b in a state where the rotation load exceeds the torque value.

In the example of FIG. 8A, the driving force of the motor M is distributed via the input-side drive transmission member 56 to the input gear 51 and the first rotation portion 41a of the torque limiter 41. The torque transmitted from the input gear 51 via the torsion spring 40m to the output gear 52 and the torque transmitted from the first rotation portion 41a of the torque limiter 41 to the second rotation portion 41b are transmitted via the output-side drive transmission member 57 to the pressure roller 23b.

In the example of FIG. 8B, the driving force of a motor M2 independent from the motor M connected to the torsion spring 40m is entered to the first rotation portion 41a of the torque limiter 41. The torque transmitted from the input gear 51 via the torsion spring 40m to the output gear 52 and the torque transmitted from the first rotation portion 41a of the torque limiter 41 to the second rotation portion 41b are transmitted via the output-side drive transmission member 57 to the pressure roller 23b.

Common to both examples of FIGs. 8A and 8B, the torque value of the torque limiter 41 is set to a value smaller than the load torque of the pressure roller 23b. In a state where the drive target other than the pressure roller 23b is also driven via the drive transmission member 57, the torque value of the torque limiter 41 is set to a value smaller than the load torque including this drive target. Further, reduction ratios of drive transmission mechanisms DT3 and DT4 (FIG. 9A) are set such that an angular velocity of the first rotation portion 41a of the torque limiter 41 in a state where the pressure roller 23b rotates at a fixed speed becomes faster than an angular velocity of the second rotation portion 41b. The drive transmission mechanism DT3 is a drive transmission path from the output shaft of the motor M to the first rotation portion 41a of the torque limiter 41, and the drive transmission mechanism DT4 is a drive transmission path from the second rotation portion 41b of the torque limiter 41 to the pressure roller 23b.

By adopting a configuration in which the motor M side, i.e., the first rotation portion 41a, of the torque limiter 41 rotates faster than the pressure roller 23b side, i.e., the second rotation portion 41b, slipping of the torque limiter 41 occurs regularly when the pressure roller 23b rotates at a fixed speed. Therefore, stable torque may be transmitted via the torque limiter 41 to the pressure roller 23b. The torque limiter 41 alone cannot rotate the pressure roller 23b, but a portion of the torque for driving the pressure roller 23b can be borne on the torque limiter 41. That is, the torque loaded on the torsion spring 40m can be reduced, and the stress applied on the torsion spring 40m can also be reduced.

A variation of angular velocity of the elements that participate in the drive transmission from the motor M to the pressure roller 23b according to the present modified example will be described with reference to FIGs. 9Ato 9C.

FIGs. 9A to 9C each correspond to the states of FIGs. 2C to 2E.

As illustrated in FIG. 9A, in the state of FIG. 2C prior to the reaching of the leading edge of the sheet S to the fixing nip Nf, the angular velocity RT2 of the output side of the torsion spring 40m is equal to the angular velocity RT1 of the input side. Further, an angular velocity RT4 of an output side, i.e., the second rotation portion 41b, of the torque limiter 41 is slower than an angular velocity RT3 of the input side, i.e., the first rotation portion 41a. In the example, in a state where RT3 is 100%, RT4 is set to 99%. Further, by having the drive transmitted from the torque limiter 41 via the drive transmission mechanism DT4 to the pressure roller 23b, a torque TF1 according to a torque value TT of the torque limiter 41 and a reduction ratio of the drive transmission mechanism DT4 is transmitted to the pressure roller 23b. The torque TF1 borne on the torque limiter 41 is smaller than a load torque TF of the pressure roller 23b. A torque TF2 borne on the torsion spring 40m corresponds to (TF - TF1).

As illustrated in FIG. 9B, in the state of FIG. 2D in which the sheet S is nipped by both the transfer nip Nt and the fixing nip Nf, the angular velocity RR of the pressure roller 23b is 3% slower, for example, than the state of FIG. 9A. The angular velocity RT2 of the output side of the torsion spring 40m is 3% slower, for example, than the angular velocity RT1 of the input side of the torsion spring 40m. This is because, as described above, the peripheral speed difference between the pressure roller 23b and the intermediate transfer belt 13 is absorbed by the increase of angular deflection of the torsion spring 40m. The angular velocity RT4 of the output side, i.e., the second rotation portion 41b, of the torque limiter 41 is also delayed, but the torque TF2 transmitted via the torque limiter 41 to the pressure roller 23b is the same as the state of FIG. 9A.

As illustrated in FIG. 9C, in the state of FIG. 2E in which the trailing edge of the sheet S has passed through the transfer nip Nt, the angular velocity RR of the pressure roller 23b is faster than the state of FIG. 9A. Further, the angular velocity RT2 of the output side of the torsion spring 40m is faster than the angular velocity RT1 of the input side of the torsion spring 40m. This is because when the trailing edge of the sheet S has passed through the transfer nip Nt and tension is released, the angular deflection of the torsion spring 40m is reduced, such that the output side of the torsion spring 40m temporarily rotates faster than the input side.

If the rotational speed of the pressure roller 23b becomes too fast, fixity may be affected. According to the present modified example, if the angular velocity RT4 of the output side, i.e., the second rotation portion 41b, of the torque limiter 41 becomes faster than the angular velocity RT3 of the input side, i.e., the first rotation portion 41a, a braking force is generated so as to suppress rapid acceleration of the pressure roller 23b. The torque limiter 41 suppresses acceleration of the pressure roller 23b by restoring force of the torsion spring 40, i.e., elastic member, when the sheet being in contact with the pressure roller 23b, i.e., first conveyance member, separates from the pressure roller 23b. That is, by using the torque limiter 41 in combination with the torsion spring 40m, the rotational speed of the pressure roller 23b may be stabilized further, and a more stable fixity may be realized.

### Example of Using Rotary Damper in Combination

As a method for stabling the rotational speed of the pressure roller 23b, the torsion spring 40 and a rotary damper 45 may be used in combination, as illustrated in FIG. 3C. The rotary damper 45 includes an input-side rotation portion 45a and an output-side rotation portion 45b, and a fluid such as oil is filled between the input-side rotation portion 45a and the output-side rotation portion 45b. In a state where relative rotation of the input-side rotation portion 45a and the output-side rotation portion 45b occurs, the rotary damper 45 generates a braking force according to the speed of relative rotation.

According to the illustrated example, the input gear 51 of the drive transmission unit DT and the input-side rotation portion 45a of the rotary damper 45 are engaged, and the output gear 52 of the drive transmission unit DT and the output-side rotation portion 45b of the rotary damper 45 are engaged.

If there is a peripheral speed difference between the intermediate transfer belt 13 and the pressure roller 23b, in a state where the sheet S is nipped by both the transfer nip Nt and the fixing nip Nf, a speed difference occurs between the input gear 51 and the output gear 52, and relative rotation of the input-side rotation portion 45a and the output-side rotation portion 45b occurs. However, the speed difference between the input gear 51 and the output gear 52 in this state is small, and the relative rotation speed of the input-side rotation portion 45a and the output-side rotation portion 45b is also small, such that the braking force generated by the rotary damper 45 is also small.

Meanwhile, when the trailing edge of the sheet S has passed through the transfer nip Nt, if the pressure roller 23b attempts to rotate at a fast speed by the elastic force of the torsion spring 40, the speed difference of the input gear 51 and the output gear 52 becomes great. In this case, the speed of relative rotation of the input-side rotation portion 45a and the output-side rotation portion 45b becomes great, and the braking force generated by the rotary damper 45 becomes great. As a result, it becomes possible to suppress rapid acceleration of the pressure roller 23b, and a more stable fixity may be realized.

### Example of Assembling Torsion Spring in Pre-twisted State

An example of assembling the torsion spring 40 in a pre-twisted state to an apparatus will be described. As described above, according to the first embodiment, the torsion spring 40 starts to be deflected after the motor M is started, and when a torque transmitted from the deflected torsion spring 40 to the output gear 52 exceeds the load torque of the pressure roller 23b, the output gear 52 and the pressure roller 23b start to rotate. That is, a delay time until the angular deflection of the torsion spring 40 reaches a sufficient value occurs from the starting of the motor M until the pressure roller 23b starts to rotate.

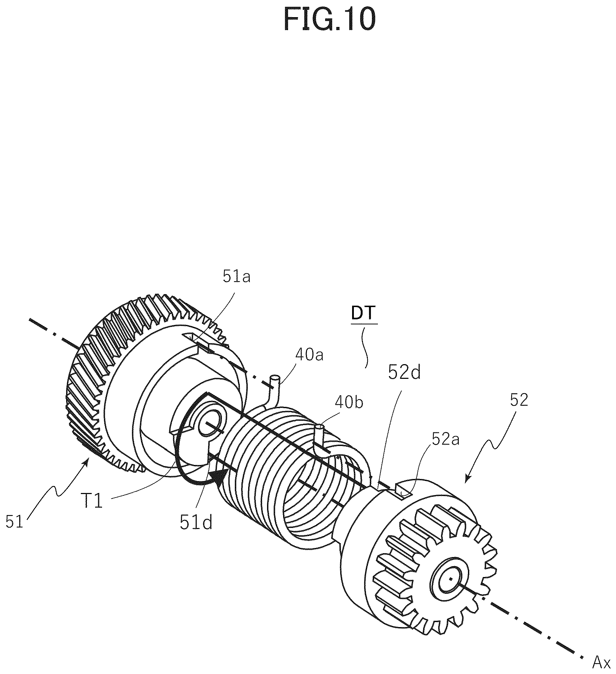

A modified example of assembling the torsion spring 40 in a state twisted in advance by a predetermined angular deflection to the apparatus will be described with reference to FIG. 10 as a method for reducing the delay time before the rotation of the pressure roller 23b is started. FIG. 10 is an exploded view of the drive transmission unit DT according to the modified example.

As illustrated in FIG. 10, projecting portions 51d and 52d are formed on the input gear 51 and the output gear 52 according to the present modified example. In a state where the torsion spring 40, the input gear 51, and the output gear 52 are assembled, the projecting portions 51d and 52d are mutually engaged, and the relative rotational angle, i.e., rotational phase, of the input gear 51 and the output gear 52 in the rotational direction about the rotational axis Ax is restricted. In this state, the torsion spring 40 is retained in a state deflected in advance by a predetermined angular deflection T1 with the unloaded state set as reference. That is, in a state where the input gear 51 is stopped, the torsion spring 40 maintains a state in which it is deformed from the non-loaded state. The twisting direction of the angular deflection T1 is set such that a torque in a same direction as the direction of the torque transmitted from the torsion spring 40 to the output gear 52 when the pressure roller 23b is driven to rotate is applied from the torsion spring 40 to the output gear 52.

The predetermined angular deflection T1 is set to a value smaller than a total load torque of the drive target to which drive is transmitted via the torsion spring 40. For example, in a state where the drive target to which drive is transmitted via the torsion spring 40 is the pressure roller 23b alone, the load torque thereof is 2.0 kgf cm, and the spring constant of the torsion spring 40 is 0.01 kgf cm/°, the angular deflection T1 is set to 180°. In this case, in a state prior to the starting of the motor M, a torque, i.e., initial torque, of 1.8 kgf cm is applied to the output gear 52 by the elastic force of the torsion spring 40. This initial torque is smaller than the load torque of the pressure roller 23b, such that the initial torque will not cause the pressure roller 23b to rotate.

When the motor M is started, the angular deflection of the torsion spring 40 is increased. In this state, the angular deflection of the torsion spring 40 in a state deflected in advance by the angular deflection T1 is increased further, and the torque applied from the torsion spring 40 to the output gear 52 is increased. When the torque applied from the torsion spring 40 to the output gear 52 exceeds the load torque of the pressure roller 23b, the pressure roller 23b starts to rotate.

In the case of the present modified example, from the starting of the motor M until the torque entered from the motor M to the input gear 51 exceeds the initial torque of the torsion spring 40, the contact of the projecting portions 51d and 52d is maintained, and relative rotation of the input gear 51 and the output gear 52 does not occur. When the torque entered from the motor M to the input gear 51 exceeds the initial torque of the torsion spring 40, the output gear 52 starts to rotate at an angular velocity that differs from that of the input gear 51.

During the period of time from when the motor M is started until the rotation of the output gear 52 and the pressure roller 23b is started, the angular deflection of the torsion spring 40 is increased until an elastic force corresponding to the difference between the load torque of the pressure roller 23b and the initial torque of the torsion spring 40 is generated. In this case, even at a point of time when the motor M is started, the torsion spring 40 is deflected by the angular deflection T1 corresponding to the initial torque. Therefore, compared to the case of the first embodiment in which the torsion spring 40 is not deflected at the point of time when the motor M is started, the waiting time for the rotation of the pressure roller 23b to start may be shortened.

### Relationship between Pressure Roller and Sheet Discharge Roller

As illustrated in FIG. 3A, according to the first embodiment, the sheet discharge roller 24a disposed downstream of the pressure roller 23b in the sheet conveyance direction also receives driving force of the motor M via the drive transmission unit DT including the torsion spring 40. Therefore, during a period of time at which the leading edge of the sheet S has reached the nip portion of the sheet discharge roller pair 24 and before the trailing edge of the sheet S has passed through the transfer nip Nt, by having the sheet discharge roller pair 24 pull the sheet S, slipping of the sheet S against the intermediate transfer belt 13 may be suppressed.

In a state where the sheet S is nipped and conveyed by both the fixing nip Nf and the nip portion of the sheet discharge roller pair 24, a peripheral speed difference may occur between the pressure roller 23b and the sheet discharge roller 24a due to influences such as thermal expansion or abrasion of the roller. If tension or slack occurs to the sheet S between the fixing nip Nf and the nip portion of the sheet discharge roller pair 24 by the peripheral speed difference, the angular velocity of the pressure roller 23b may be varied by the force applied from the sheet S. If the angular velocity of the pressure roller 23b is varied during transfer of toner image, even if slipping of the sheet S does not occur, the change in position of the sheet S may affect the transfer accuracy of the toner image at the transfer nip Nt.

Therefore, according to the present embodiment, not only the pressure roller 23b but also the sheet discharge roller 24a is configured to receive the driving force of the motor M via the torsion spring 40. Therefore, when tension is applied to the sheet S between the fixing nip Nf and the nip portion of the sheet discharge roller pair 24, the load torque of the pressure roller 23b reduces by the force received from the sheet S, while the load torque of the sheet discharge roller 24a is increased by the force applied from the sheet S. In contrast, when the sheet S is slacked between the fixing nip Nf and the nip portion of the sheet discharge roller pair 24, the load torque of the pressure roller 23b is increased by the force applied from the sheet S, while the load torque of the sheet discharge roller 24a is reduced by the force applied from the sheet S.

That is, according to a configuration of the first embodiment in which the drive transmission path to the pressure roller 23b and the sheet discharge roller 24a is branched at a portion downstream of the torsion spring 40, the influence of the peripheral speed difference between the pressure roller 23b and the sheet discharge roller 24a is cancelled. Therefore, the rapid change of angular velocity of the pressure roller 23b may be suppressed, and the influence that the peripheral speed difference between the pressure roller 23b and the sheet discharge roller 24a has on the transfer accuracy of toner image may be suppressed.

### Use in Combination with Loop Control between Transfer and Fixing Nips

As illustrated in the modified example of FIG. 3B, if a motor M1 that drives the belt driving roller 14 independently from the motor M that drives the pressure roller 23b is provided, a sensor 60 for controlling the slacking of the sheet S between the transfer nip Nt and the fixing nip Nf may be disposed. The sensor 60 is arranged between the transfer nip Nt and the fixing nip Nf to detect the sheet S at a predetermined detection position in a thickness direction of the sheet S in a sheet conveyance path.

A control unit of the image forming apparatus 100 can determine whether a slacked amount, i.e., looped amount, of the sheet S between the transfer nip Nt and the fixing nip Nf is of an appropriate magnitude, based on a detection result of the sensor 60. In a case where the slacked amount of the sheet S is too small, the control unit raises the rotational speed of the motor M to prevent the occurrence of pulling of the sheet S between the transfer nip Nt and the fixing nip Nf. In a case where the slacked amount of the sheet S is too large, the control unit lowers the rotational speed of the motor M to prevent the sheet S from being scraped against a guide that forms the sheet conveyance path and having scratch marks formed on the image.

However, there may be a case where accurate control of the slacked amount is difficult by adopting only the control of the slacked amount, i.e., loop control, using the sensor 60, due for example to detection error of the sensor 60. Further, especially in a case where a thick paper having a high rigidity is used as the sheet S, the width of an appropriate slacked amount is small, and it may be difficult to have the slacked amount fall within an appropriate range by only controlling the speed of the motor M.

Meanwhile, according to the modified example of FIG. 3B, speed control of the motor M and the torsion spring 40 capable of absorbing the peripheral speed difference between the intermediate transfer belt 13 and the pressure roller 23b are used in combination. Thereby, a more stable conveyance of the sheet S is enabled.

### Other Modified Examples

According to the first embodiment, a configuration in which the torsion spring 40 is adopted as the elastic member was described, but a compression spring, a tension spring, or other elastic members such as rubber, may also be adopted as the elastic member.

### Second Embodiment

A second embodiment serving as another embodiment will be described. In the following description, elements denoted with the same reference numbers as the first embodiment basically have the same configurations and effects as the elements described in the first embodiment unless denoted otherwise, and the portions that differ from the first embodiment will mainly be described below.

The registration roller 20b according to the present embodiment is an example of a first conveyance member that comes into contact with the sheet S and rotates to convey the sheet S in the sheet conveyance direction. Further, the registration roller 20b is arranged adjacent to the transfer nip Nt in the sheet conveyance direction.

According to the image forming apparatus 100 of the first embodiment, the registration roller pair 20a disposed adjacent to the transfer nip Nt and upstream of the transfer nip Nt in the sheet conveyance direction generally has a holding force, i.e., pressing force, set to a high value. This is because if the sheet S slips with respect to the registration roller pair 20a, skewing of the sheet S may occur, or the position of the sheet S at the transfer nip Nt may be disturbed, which may lead to image defects.

However, since the holding force, i.e., pressing force, of the registration roller pair 20a is high, if there is a deviation in peripheral speed between the registration roller 20b and the intermediate transfer belt 13, it may cause image defects. That is, due to the peripheral speed difference, pulling of the sheet S or slacking of the sheet S may occur between the registration nip Nr and the transfer nip Nt, such that the sheet S may slip against the intermediate transfer belt 13 and image defects may occur.

Meanwhile, the conveyance roller of the image forming apparatus 100 including the registration roller 20b will be worn by repeated image forming operations, and the roller diameter, i.e., outer diameter, becomes gradually smaller. Even in a case where the angular velocity of the registration roller 20b is fixed, as the roller diameter of the registration roller 20b reduces, the peripheral speed of the registration roller 20b is slowed down. Further, the roller diameter of the conveyance roller of the image forming apparatus 100 including the registration roller 20b may also vary due to fabrication tolerance and environmental conditions, such as temperature and humidity. Due to such reasons, when deviation occurs to the peripheral speeds of the registration roller 20b and the intermediate transfer belt 13, it may cause image defects as described above.

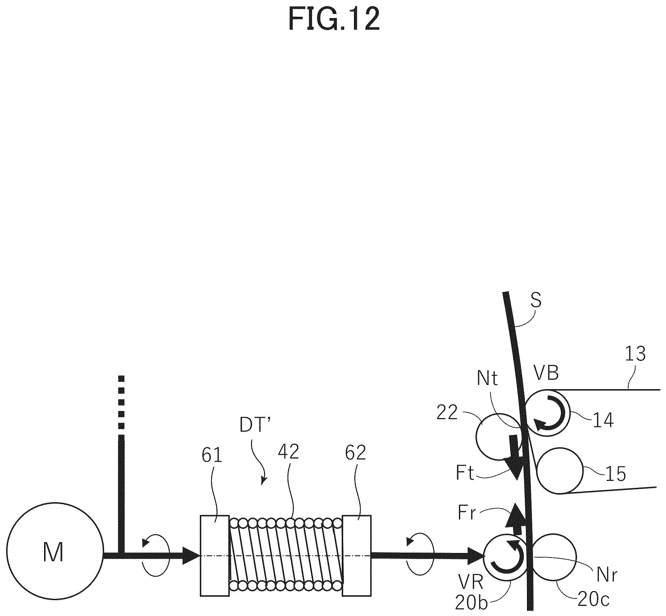

Therefore, according to the present embodiment, as illustrated in FIG. 12, drive transmission to the registration roller 20b is performed via a drive transmission unit DT' including a torsion spring 42. By elastic deformation of the torsion spring 42, the peripheral speed of the registration roller 20b is allowed to vary in accordance with the peripheral speed of the intermediate transfer belt 13, such that image defects may be suppressed.

As illustrated in FIG. 12, the drive transmission unit DT' includes an input gear 61 serving as a first rotary member, i.e., input-side rotary member, an output gear 62 serving as a second rotary member, i.e., output-side rotary member, and the torsion spring 42 serving as an elastic member. The actual configuration of the drive transmission unit DT' may be similar to the drive transmission unit DT described according to the first embodiment or the modified example thereof.

The pressing force of the registration roller pair 20a is generally high, such that the load torque for rotating the registration roller 20b also tends to be high. The load torque of the registration roller 20b includes a rotational resistance of the registration roller 20b caused by friction against a bearing that supports the registration roller 20b, and a frictional resistance that the registration roller 20b receives from the registration driven roller 20c by rotational resistance of the registration driven roller 20c facing the registration roller 20b. Further, the load torque of the registration roller 20b may also include force that the registration roller 20b receives from the sheet S being pulled by a conveyance member positioned upstream of the registration roller pair 20a, which according to the present embodiment is the separation roller pair 21, i.e., back tension. In consideration of these elements, the load torque of the registration roller 20b required to convey the sheet S stably may be set. The load torque of the registration roller 20b may be obtained by experiments.

Unlike the pressure roller 23b, the registration roller 20b is distant from the heater 23c serving as a heat source, such that the effect of thermal expansion of the registration roller 20b is relatively small. However, in consideration of the aforementioned abrasion of the registration roller 20b or the fabrication tolerance of the registration roller 20b and the belt driving roller 14, a peripheral speed difference may occur between the registration roller 20b and the intermediate transfer belt 13. In the following description, it is assumed that a speed difference of approximately 1% may occur between the registration roller 20b and the intermediate transfer belt 13. According to the speed difference, for example, while the intermediate transfer belt 13 rotates for a circumferential surface movement distance corresponding to the long side of an A4 size sheet S, i.e., 297 mm, the registration roller 20b rotates for a circumferential surface movement distance, i.e., 300 mm, that is approximately 3 mm longer than the intermediate transfer belt 13.

According to the present embodiment, the peripheral speed of the registration roller 20b is set by taking into consideration that the peripheral speed of the registration roller 20b is gradually reduced by abrasion of the registration roller 20b along with the increase in the accumulated number of times of execution of the image forming operation. That is, at the time of shipment of the image forming apparatus 100, the peripheral speed of the registration roller 20b is set to a value 0.7 % faster than the peripheral speed of the intermediate transfer belt 13.

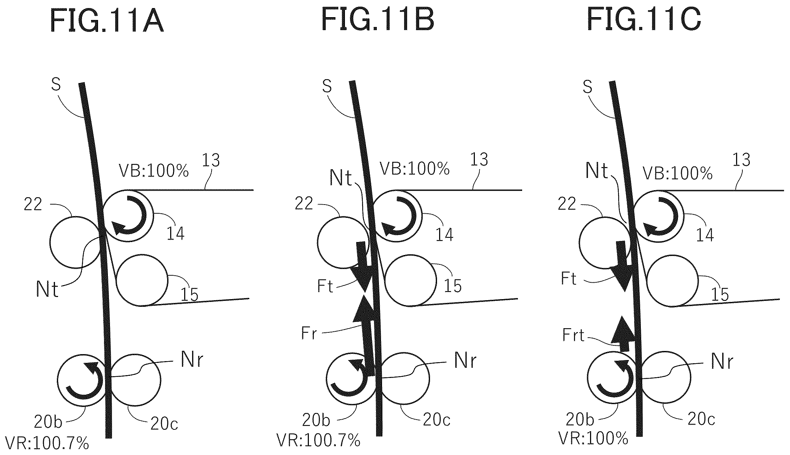

As illustrated in FIG. 11A, if a peripheral speed VR of the registration roller 20b corresponds to the peripheral speed VB of the intermediate transfer belt 13, image defects caused by the peripheral speed difference will not occur. In FIGs. 11A to 11C, the peripheral speed of the registration roller 20b is displayed in percentage, in a state where the peripheral speed VB of the intermediate transfer belt 13 during image formation is 100%.

As illustrated in FIG. 11B, in a case where the peripheral speed VR of the registration roller 20b is set to a value 0.7% faster than the peripheral speed VB of the intermediate transfer belt 13, the registration roller 20b conveys the sheet S so as to press the sheet S toward the transfer nip Nt. In this state, a holding force Fr of the sheet S at the registration nip Nr is greater than the holding force Ft of the sheet S at the transfer nip Nt. Therefore, if the state of FIG. 11B continues, the sheet S may slip against the intermediate transfer belt 13 at the transfer nip Nt.

As illustrated in FIG. 11C, according to the present embodiment, the peripheral speed difference between the registration roller 20b and the intermediate transfer belt 13 is absorbed by the elastic deformation of the torsion spring 42, such that drive may be transmitted to the registration roller 20b at the peripheral speed VR equal to the peripheral speed VB of the intermediate transfer belt 13. That is, the rotation of the registration roller 20b is allowed to be delayed compared to the peripheral speed of the state prior to the reaching of the leading edge of the sheet S to the transfer nip Nt by the elastic deformation of the torsion spring 42. Thus, the pushing of the sheet S by the registration roller pair 20a is eased.

As illustrated in FIG. 11C, while the sheet S is nipped by both the nip portion of the registration roller 20b and the transfer nip Nt, the angular deflection of the torsion spring 42 gradually increases. Along with the increase of angular deflection of the torsion spring 42, the torque transmitted from the torsion spring 42 to the output gear 62 is increased, and the force in the sheet conveyance direction, i.e., pushing force, that the registration roller 20b applies on the sheet S is increased. However, if the pushing force corresponding to a maximum value of angular deflection during a period of time at which the sheet S is nipped by both the nip portion of the registration roller 20b and the transfer nip Nt is smaller than the holding force Ft of the sheet S at the transfer nip Nt, no slipping of the sheet S occurs at the transfer nip Nt. That is, the spring constant of the torsion spring 42 is set so as not to cause slipping of the sheet S at the transfer nip Nt by taking into consideration the maximum value of angular deflection during the above-mentioned period of time.

A case in which the peripheral speed VR of the registration roller 20b is set faster than the peripheral speed VB of the intermediate transfer belt 13 has been described, but when the abrasion of the registration roller 20b advances, the peripheral speed VR of the registration roller 20b becomes slower than the peripheral speed VB of the intermediate transfer belt 13. Even according to this case, the peripheral speed difference between the registration roller 20b and the intermediate transfer belt 13 is absorbed by the elastic deformation of the torsion spring 42. That is, the rotation of the registration roller 20b is allowed to be increased in speed compared to the peripheral speed of the state prior to the reaching of the leading edge of the sheet S to the transfer nip Nt by the elastic deformation of the torsion spring 42. Therefore, the occurrence of image defects caused by the registration roller pair 20a pulling the sheet S may be suppressed.

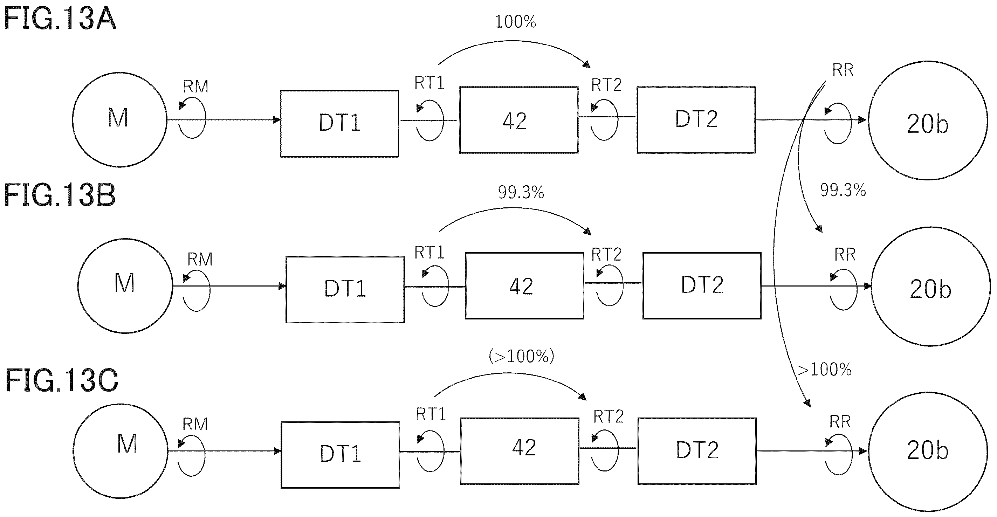

The variation of angular velocity of the elements participating in the drive transmission from the motor M to the registration roller 20b according to the present embodiment will be described with reference to FIGs. 13A to 13C.

FIG. 13A illustrates a state after the leading edge of the sheet S has passed through the registration nip Nr and before the leading edge of the sheet S arrives at the transfer nip Nt. FIG. 13B illustrates a state after the leading edge of the sheet S has arrived at the transfer nip Nt and before the trailing edge of the sheet S passes through the registration nip Nr. FIG. 13C illustrates a state after the trailing edge of the sheet S has passed through the registration nip Nr and before the trailing edge of the sheet S passes through the transfer nip Nt.

In FIGs. 13A to 13C, the angular velocity of the output shaft of the motor M is referred to as RM and the angular velocity of the registration roller 20b is referred to as RR. The angular velocity of the input side of the torsion spring 42 is referred to as RT1, and the angular velocity of the output side of the torsion spring 42 is referred to as RT2. The angular velocity RT1 of the input side of the torsion spring 42 is determined based on the angular velocity RM of the output shaft of the motor M and the reduction ratio of the drive transmission mechanism DT1 from the output shaft of the motor M to the input gear 51. The angular velocity RR of the registration roller 20b is determined based on the angular velocity RT2 of the output side of the torsion spring 42 and the reduction ratio of the drive transmission mechanism DT2 from the output gear 52 to the registration roller 20b.

As illustrated in FIG. 13A, in a state prior to the reaching of the leading edge of the sheet S to the transfer nip Nt, the angular velocity RT2 of the output side of the torsion spring 42 is equal to the angular velocity RT1 of the input side.

As illustrated in FIG. 13B, in a state where the sheet S is nipped by both the registration nip Nr and the transfer nip Nt, the angular velocity RR of the registration roller 20b is delayed by 0.7% compared to the state of FIG. 13A. Further, due to the elastic deformation of the torsion spring 42, the angular velocity RT2 of the output side of the torsion spring 42 is allowed to be delayed by 0.7% with respect to the angular velocity RT1 of the input side of the torsion spring 42. That is, the peripheral speed difference of the registration roller 20b and the intermediate transfer belt 13 is absorbed by the elastic deformation of the torsion spring 42.

As illustrated in FIG. 13C, in a state after the trailing edge of the sheet S has passed through the registration nip Nr, the angular velocity RR of the registration roller 20b becomes faster than the state of FIG. 13A. Further, the angular velocity RT2 of the output side of the torsion spring 42 becomes faster than the angular velocity RT1 of the input side of the torsion spring 42. This is because when the trailing edge of the sheet S has passed through the transfer nip Nr and the tension is released, a part of the elastic deformation of the torsion spring 42 is restored, such that the output side of the torsion spring 42 temporarily rotates faster than the input side. Further, if the angular deflection of the torsion spring 42 becomes equal to the regular state of FIG. 13A, the angular velocity RR of the registration roller 20b and the angular velocity RT2 of the output side of the torsion spring 42 will be equal to the state of FIG. 13A.

Even according to the configuration of the present embodiment, due to the elastic deformation of the torsion spring 42, i.e., elastic member, the transmission of driving force to the registration roller 20b, i.e., first conveyance member, is allowed in a state where the angular velocity of the input gear 61, i.e., first rotary member, differs from that of the output gear 62, i.e., second rotary member. In other words, the torsion spring 42, i.e., elastic member, is deformable to allow the registration roller 20b, i.e., first conveyance member, to rotate in a state where the angular velocity of the input gear 61, i.e., first rotary member, driven by the motor M and the angular velocity of the output gear 62, i.e., second rotary member, differ from each other. Thereby, the registration roller 20b is allowed to rotate at a peripheral speed corresponding to the peripheral speed of the intermediate transfer belt 13. As a result, drawbacks caused by pulling of the sheet S or slacking of the sheet S between the registration roller 20b and the intermediate transfer belt 13 may be suppressed.

That is, according to the present embodiment, a sheet conveyance apparatus and an image forming apparatus capable of conveying the sheet more stably may be provided. Modified Example

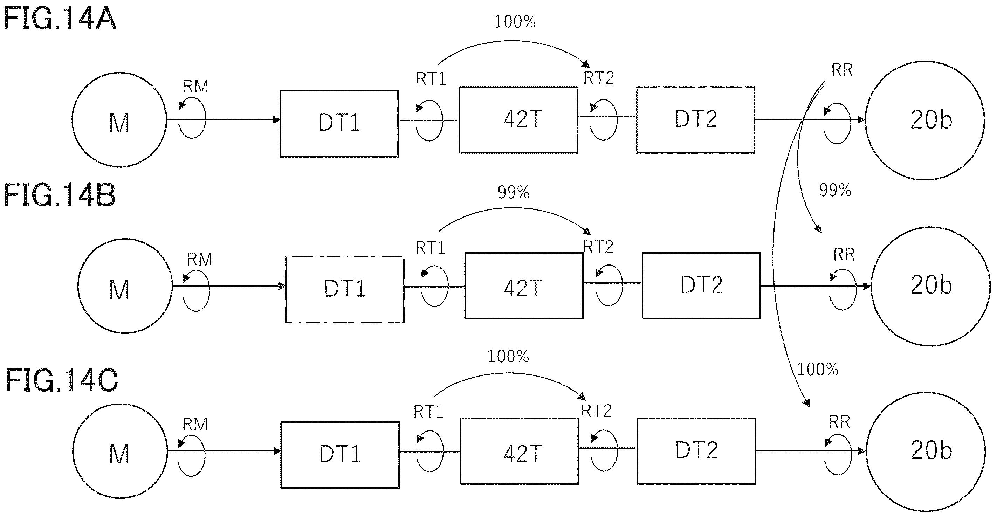

As illustrated in FIGs. 14A to 14C, a torque limiter 42T may be disposed instead of the torsion spring 42. In that case, there is an advantage in that the pushing force becomes approximately constant regardless of the difference in feed rates. Meanwhile, the configuration using the torsion spring 42 may possibly be realized at a lower cost.

### Third Embodiment

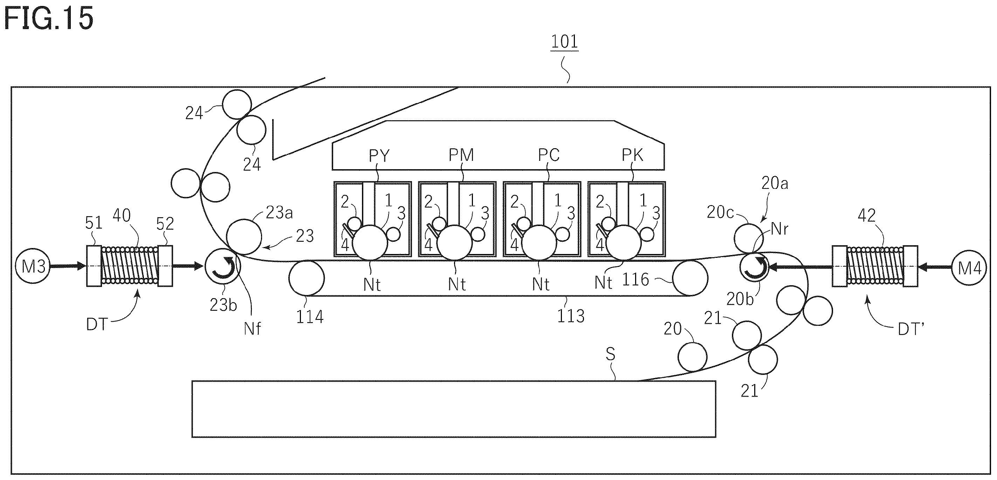

A third embodiment serving as another embodiment will be described with reference to FIG. 15. In the following description, elements denoted with the same reference numbers as the first embodiment basically have the same configurations and effects as the elements described in the first embodiment unless denoted otherwise, such that the portions that differ from the first embodiment will mainly be described below.

An image forming apparatus 101 according to the present embodiment is a so-called electrostatic conveyor belt-type electrophotographic color image forming apparatus, in which four process cartridges PY, PM, PC, and PK are arranged along a conveyor belt 113. The conveyor belt 113 is stretched across a plurality of rollers 114 and 116, and driven to rotate in a counterclockwise direction in the drawing during image forming. The sheet S sent out from the registration roller pair 20a is borne electrostatically on the conveyor belt 113, and conveyed through four transfer nips Nt toward the fixing unit 23. The transfer nip Nt is a portion at which toner image is transferred from each photosensitive drum 1 of each of the process cartridges PY, PM, PC, and PK to the sheet S, and it is a nip portion formed between each photosensitive drum 1 and the conveyor belt 113.

The pressure roller 23b of the fixing unit 23 is driven by a motor M3 serving as a driving source. The driving force of the motor M3 is transmitted via the drive transmission unit DT including the torsion spring 40 to the pressure roller 23b. A configuration of the drive transmission unit DT related to the driving of the pressure roller 23b may be the same as that described in the first embodiment or the modified example thereof. According to this configuration, advantages similar to the first embodiment or the modified example thereof may be obtained.

The registration roller 20b of the registration roller pair 20a is driven by a motor M4 serving as a driving source. The driving force of the motor M4 is transmitted to the registration roller 20b via the drive transmission unit DT' including the torsion spring 42. The configuration of the drive transmission unit DT' related to the driving of the registration roller 20b may be the same as that described in the second embodiment.

A driving source for driving a roller 114 or 116 for rotating the conveyor belt 113 may be the same as the motor M3 or the motor M4. Further, the motor M3 and the motor M4 may be the same motor. According to this configuration, advantages similar to the second embodiment may be obtained.

Each of the pressure roller 23b and the registration roller 20b mentioned above is an example of a first conveyance member. In a state where the pressure roller 23b is referred to as a first conveyance member, a conveyance member driven by a common driving source as the pressure roller 23b, i.e., the motor M3, and arranged to be in contact with the sheet S simultaneously as the pressure roller 23b may be referred to as a second conveyance member. In a state where the motor M3 drives the roller 114 or 116, the conveyor belt 113 serves as an example of a second conveyance member.

In a state where the registration roller 20b is referred to as a first conveyance member, a conveyance member driven by a common driving source as the registration roller 20b, i.e., the motor M4, and arranged to be in contact with the sheet S simultaneously as the registration roller 20b may be referred to as a second conveyance member. In a state where the motor M4 drives the roller 114 or 116, the conveyor belt 113 serves as an example of a second conveyance member.

### Other Modifications

The "image forming apparatus" according to the present disclosure is not limited to an electrophotographic system, and it may be an inkjet printer, for example.

According to the respective embodiments, the elastic member absorbing the speed difference between the first rotary member and the second rotary member is the torsion spring. However, springs other than the torsion spring may be used as the elastic member. For example, a compression spring compressed in the rotational direction may be used. However, the torsion spring may be preferable as the elastic member, since it has a wide elastic region in the rotational direction.

According to the present disclosure, a sheet conveyance apparatus and an image forming apparatus capable of conveying the sheet more stably may be provided.

### Other Embodiments

Various embodiments have been described in detail above but it will be understood that the present disclosure is not limited to these embodiments and encompasses all modifications, variants, alternatives and equivalents falling within the scope of the appended claims.

## Claims

1. A sheet conveyance apparatus comprising:
a first conveyance member (23b) configured to rotate in contact with a sheet to convey the sheet in a sheet conveyance direction;
a second conveyance member (13) disposed at a position different from a position of the first conveyance member (23b) in the sheet conveyance direction, the second conveyance member (13) being configured to rotate in contact with the sheet to convey the sheet during at least a part of a period of time in which the first conveyance member (23b) is in contact with the sheet;
a motor (M) configured to drive the first conveyance member (23b) and the second conveyance member (13);
a first rotary member (51) connected to the motor (M) and configured to rotate;
a second rotary member (52) connected to the first conveyance member (23b) and configured to rotate; and
an elastic member (40) engaged with the first rotary member (51) and the second rotary member (52), the elastic member (40) being deformable to allow the first conveyance member (23b) to rotate in a state where an angular velocity of the first rotary member (51) being driven by the motor (M) differs from an angular velocity of the second rotary member (52).

2. The sheet conveyance apparatus according to Claim 1,
wherein the first conveyance member (23b) includes a first contact surface (23b1) configured to come into contact with the sheet,
wherein the second conveyance member (13) includes a second contact surface (13a) configured to come into contact with the sheet,
wherein, in a case where a peripheral speed of the first contact surface (23b1) in a first state is referred to as a first speed and a peripheral speed of the second contact surface (13a) in the first state is referred to as a second speed, where the first state is a state where the first conveyance member (23b) and the second conveyance member (13) are driven by the motor (M) and the sheet is separated from at least one of the first contact surface (23b1) and the second contact surface (13a), the elastic member (40) is deformable to allow the peripheral speed of the first contact surface (23b1) to be a third speed in a second state where the first conveyance member (23b) and the second conveyance member (13) are driven by the motor (M) and the sheet is in contact with both the first contact surface (23b1) and the second contact surface (13a), and
wherein a speed difference between the third speed and the second speed is smaller than a speed difference between the first speed and the second speed.

3. The sheet conveyance apparatus according to Claim 2,
wherein the first speed is faster than the second speed, and
wherein the third speed is slower than the first speed.

4. The sheet conveyance apparatus according to any one of Claims 1 to 3, further comprising:
a first conveyance member pair (23a, 23b) including the first conveyance member (23b) and a first opposing member (23a) opposing the first conveyance member (23b); and
a second conveyance member pair (12, 22) including the second conveyance member (13) and a second opposing member (22) opposing the second conveyance member (13),
wherein, in a case where a state in which the sheet is nipped by the first conveyance member pair (23a, 23b) and the second conveyance member pair (12, 22) is referred to as a nipped state, a position of the sheet when the nipped state is ended is referred to as a release position, and a state in which the angular velocity of the first rotary member (51) differs from the angular velocity of the second rotary member (52) is referred to as a different-velocity state, the elastic member (40) is deformable such that the first rotary member (51) and the second rotary member (52) are in the different-velocity state when the sheet reaches the release position.

5. The sheet conveyance apparatus according to any one of Claims 1 to 3, further comprising:
a first conveyance member pair (23a, 23b) including the first conveyance member (23b) and a first opposing member (23a) opposing the first conveyance member (23b); and
a second conveyance member pair (12, 22) including the second conveyance member (13), and a second opposing member (22) opposing the second conveyance member (13),
wherein, in a case where a state in which the sheet is nipped by both the first conveyance member pair (23a, 23b) and the second conveyance member pair (12, 22) is referred to as a nipped state, and a position of the sheet when the nipped state is ended is referred to as a release position, the elastic member (40) is configured to allow the angular velocity of the second rotary member (52) to be slower than the angular velocity of the first rotary member (51) when the sheet reaches the release position.

6. The sheet conveyance apparatus according to any one of Claims 1 to 3, further comprising:
a first conveyance member pair (23a, 23b) including the first conveyance member (23b), and a first opposing member (23a) opposing the first conveyance member (23b); and
a second conveyance member pair (12, 22) including the second conveyance member (13), and a second opposing member (22) opposing the second conveyance member (13),
wherein, in a case where a state in which the sheet is nipped by both the first conveyance member pair (23a, 23b) and the second conveyance member pair (12, 22) is referred to as a nipped state, and a position of the sheet when the nipped state is ended is referred to as a release position, a deformation amount of the elastic member (40) when the sheet reaches the release position is within 30% of a deformation amount of the elastic member (40) corresponding to a maximum allowable stress.

7. The sheet conveyance apparatus according to any one of Claims 1 to 6,
wherein the first rotary member (51) and the second rotary member (52) are configured to rotate about a common rotational axis (Ax).

8. The sheet conveyance apparatus according to Claim 7,
wherein the elastic member (40) is a torsion coil spring (40) having one end (40a) engaged with the first rotary member (51) and an other end (40b) engaged with the second rotary member (52), the torsion coil spring (40) being configured to be deflected about the rotational axis (Ax).

9. The sheet conveyance apparatus according to Claim 8,
wherein the first rotary member (51) includes a first engagement portion (51a) engaged with the one end (40a) of the elastic member (40),
wherein the second rotary member (52) includes a second engagement portion (52a) engaged with the other end (40b) of the elastic member (40), and
wherein the first engagement portion (51a) is at a position distant from the second engagement portion (52a) in a direction of the rotational axis (Ax).

10. The sheet conveyance apparatus according to Claim 8 or 9,
wherein, in a state where the first rotary member (51) is stopped, the first rotary member (51) and the second rotary member (52) are in contact such that relative rotation to each other is restricted and the elastic member (40) is in a state deformed from a free state.

11. The sheet conveyance apparatus according to any one of Claims 1 to 10, further comprising:
a transfer unit (12) configured to form a transfer nip (Nt) and to transfer a toner image onto the sheet while nipping the sheet at the transfer nip (Nt),
wherein the first conveyance member (23b) is disposed adjacent to the transfer nip (Nt) in the sheet conveyance direction.

12. The sheet conveyance apparatus according to Claim 11,
wherein the second conveyance member (13) is provided in the transfer unit (12) and configured to come into contact with the sheet at the transfer nip (Nt).

13. The sheet conveyance apparatus according to any one of Claims 1 to 12, further comprising:
a fixing unit (23) configured to form a fixing nip (Nf) and to fix a toner image to the sheet while nipping the sheet at the fixing nip (Nf),
wherein the first conveyance member (23b) is provided in the fixing unit (23).

14. The sheet conveyance apparatus according to any one of Claims 1 to 13, further comprising:
a limiter (41) connected to the first conveyance member (23b) and configured to suppress acceleration of the first conveyance member (23b) caused by restoring force of the elastic member (40) when the sheet in contact with the first conveyance member (23b) is separated from the first conveyance member (23b).

15. An image forming apparatus comprising:
the sheet conveyance apparatus according to any one of Claims 1 to 14, and
an image forming portion (PY, PM, PC, PK) configured to form an image to be recorded on the sheet being conveyed by the sheet conveyance apparatus.
